# FASCICULE DE BREVET EUROPEEN

(11) **EP 3 131 991 B1**
(45) Date de publication et mention de la délivrance du brevet: **03.01.2018**
(21) Numéro de dépôt: 15725695.9
(22) Date de dépôt: 14.04.2015
(51) Int. Cl.: C09D 183/04, D06M 15/643

(54) **PROCÉDÉ D'ENDUCTION D'UNE COMPOSITION SILICONE SUR UN SUPPORT SOUPLE**
VERFAHREN ZUR BESCHICHTUNG EINES FLEXIBLEN TRÄGERS MIT EINER SILIKONZUSAMMENSETZUNG
METHOD FOR COATING A FLEXIBLE SUPPORT WITH A SILICONE COMPOSITION

(30) Priorité: 18.04.2014 FR 1400941
(43) Date de publication de la demande: 22.02.2017
(73) Titulaire: Bluestar Silicones France SAS, 69003 Lyon (FR)
(72) Inventeur: FEDER, Michel, 69100 Villeurbanne (FR); MALIVERNEY, Christian, 69690 Saint Julien sur Bibost (FR)
(74) Mandataire: Mekki, Boualem
(86) Numéro de dépôt international: PCT/FR2015/000078
(87) Numéro de publication internationale: WO 2015/158967

(56) Documents cités:
- US-A- 5 985 991
- US-A1- 2007 203 307
- US-A1- 2011 028 646

## Description

La présente invention concerne un procédé d'enduction d'un support souple qui est de préférence en textile, en papier, en polychlorure de vinyle, en polyester, en polypropylène, en polyamide, en polyéthylène, en polyuréthanne, en tissus de fibres de verre non tissés ou en polyéthylène téréphtalate, par une composition silicone liquide et réticulable par des réactions de condensation.

Le domaine général de l'invention est celui de l'utilisation de compositions silicones liquides et réticulables par des réactions de condensation, pour produire un élastomère silicone solide, éventuellement en couche mince, sur un support souple qui peut-être en textile, en papier, en polychlorure de vinyle, en polyester, en polypropylène, en polyamide, en polyéthylène, en polyuréthanne, en tissus de fibres de verre non tissés ou en polyéthylène téréphtalate.

Dans le domaine de l'enduction sur support souple de compositions silicones liquides et durcissables pour former des revêtements silicones solides (ou « élastomères silicones »), les compositions silicones réticulant par polyaddition ou par voie cationique sont largement répandues. Pour que le durcissement des compositions enduites ait lieu, notamment lorsque des couches minces sont souhaitées, il est nécessaire de fournir un apport énergétique thermique au moyen de four dont les températures de fonctionnement peuvent atteindre 210°C ou par irradiation au moyen de lampes haute pression émettant un rayonnement électromagnétique ou infrarouge. Ces techniques permettent d'atteindre des temps de réticulation rapide (moins d'une minute pour certaines applications) et ainsi d'utiliser des vitesses d'enduction rapides qui suivant les applications peuvent être de l'ordre de plusieurs centaines de mètres à la minute.

Cependant, ces techniques d'enduction sont très consommatrices en énergie et utilisent pour certaines d'entre elles des métaux précieux (par exemple le platine) qui ont un impact non négligeable sur les coûts des produits finis. De plus, la gamme de température nécessaire pour réticuler ce type de composition liquide de manière à former une couche mince ne permet pas une application sur tous les types de supports souples notamment ceux qui sont sensibles à toute élévation de température du milieu ambiant. Des exemples de supports souples fragiles face à une élévation de température sont : les supports souples en matériaux thermoplastiques ayant des températures de transition vitreuse inférieure à 100°C ou des dentelles en textile.

C'est pour ces raisons que les compositions silicones liquides réticulant par des réactions de condensation conservent un attrait important dans ce type d'application car elles offrent la possibilité de réticuler (et ainsi durcir) à température ambiante quand elles sont exposées à l'humidité de l'air. Parfois, la réticulation peut être accélérée par un passage du support souple enduit dans un four chauffé permettant un contrôle efficace de la température et de l'hygrométrie de l'atmosphère ambiante. La température de fonctionnement de ces fours est en général inférieure à 100°C, le plus souvent comprise entre 50 et 90°C qui est donc bien inférieure à celles couramment utilisées dans les compositions silicones liquides et réticulables par polyaddition (températures comprises entre 180 et 210°C). Les compositions silicones réticulables par condensation ne nécessitent donc pas ou peu d'apport énergétique pour former un revêtement silicone solide. Certaines lignes d'enduction industrielle sont aussi équipées d'un dispositif de jet de vapeur permettant dans une 1ère enceinte d'accélérer l'hydrolyse des fonctions réactives, puis passage par un four chaud (température qui peut être supérieure à 100°C si le type de support souple le permet) et sec, permettant de finir la réticulation du revêtement silicone par condensation des fonctions réactives préalablement hydrolysées. Les compositions silicones réticulant par hydrolyse et condensation peuvent être préparées à partir de constituants conditionnés :
- en une partie (ou en un seul emballage) qui sont dénommés « monocomposant » ou « RTV-1 » ; ou
- en 2 parties qui sont dénommés « bicomposant » ou « RTV-2 ».

Celles qui sont conditionnées en un seul emballage (RTV-1), présentent l'avantage d'être facilement mise en oeuvre car il n'est pas nécessaire d'utiliser des mélangeurs complexes pour préparer la composition silicone liquide à enduire et qui est donc directement prêt à l'emploi. Des.compositions monocomposantes RTV-1 sont décrites en détail par exemple dans les brevets EP 141 685, EP 147 323, EP 102 268, EP 21 859, FR 2 121 289 et FR 2 121 631.

Le terme "RTV" est l'acronyme pour "Room Temperature Vulcanising" et est bien connu dans le domaine des silicones.

Par « température ambiante », on entend une température comprise généralement entre 15 et 25°C.

Généralement, la cinétique des réactions de condensation est extrêmement lente. Ces réactions sont donc catalysées par un catalyseur approprié. Comme catalyseurs utilisés, on fait appel le plus souvent à des catalyseurs à base d'étain, de titane, d'une amine ou des compositions de ces catalyseurs. Les catalyseurs à base d'étain (cf. notamment FR-A-2 557 582) et de titane (cf. notamment FR-A-2 786 497) sont des catalyseurs ayant une bonne efficacité. Le plus souvent, le catalyseur de condensation est à base d'un composé organique d'étain. En effet, de nombreux catalyseurs à base d'étain ont déjà été proposés comme catalyseur de réticulation de ces RTV-1 ou RTV-2. Des catalyseurs de polycondensation classiques comprennent des composés de dialkylétain, notamment des dicarboxylates de dialkylétain tels que le dilaurate et le diacétate de dibutylétain, les composés de titanate d'alkyle tels que le tétrabutyl ou le tétraisopropyltitanate, les chélates de titane (EP-A-0 885 933, US-5 519 104, US-A-4,515,932, US-A-4,563,498, US-A-4,528,353).

L'enduction de compositions silicones réticulables par des réactions de condensation sur des supports souples vise de nombreuses applications. Par exemple, lorsque le support souple est un textile, des propriétés d'hydrofugation sont visées ou lorsque le textile est une dentelle ou une bande élastique en textile des propriétés d'adhérence à la peau et d'antiglisse sont recherchées. Lorsque le support souple est un papier ou un polymère de type PVC, PET ou polyamide des propriétés d'anti-adhérence sont alors le plus souvent recherchées.

Ainsi, une fois appliquée sur un support souple, la formulation silicone réticule au contact de l'humidité de l'air, ou par adjonction d'eau ou de précurseur d'eau, pour former un matériau solide en silicone, qui suivant les applications visera des propriétés anti-adhérente et/ou hydrofuge. Dans certaines applications et suivant le type de support souple, le produit résultant est soit un matériau composite si l'opération d'enduction résulte en une formation d'une couche d'un élastomère silicone réticulée sur un support souple, soit un support souple enduit de manière continue ou discontinue par un cordon constitué d'un élastomère silicone solide, et donc réticulé.

Hors, une production industrielle implique des cadences d'enduction les plus élevées possibles afin d'optimiser la productivité et un stockage des produits finis ou semi-finis en vue d'une utilisation ou d'un traitement ultérieur. Le stockage est communément effectué selon le type d'industrie via un empilement des supports souples enduits ou via un enroulement des supports souples enduits au moyen de rouleaux ou de cylindres enrouleurs. Cependant, l'un des challenges rencontrés par ces pratiques réside dans le mécanisme chimique du durcissement. En effet, la première étape de la condensation consiste en une hydrolyse de fonctions réactives du type acétoxysilane, cétiminoxysilane ou alcoxysilane pour former des groupements silanols grâce à la vapeur d'eau de l'air ambiant qui diffuse dans le matériau à partir de la surface exposée à l'atmosphère. Cette étape d'hydrolyse est donc clé car elle est suivie par des réactions de condensation entre les groupements silanols formés et d'autres fonctions réactives résiduelles. Néanmoins, la diffusion de la vapeur d'eau au sein du matériau silicone à partir de la surface exposée à l'atmosphère n'est pas instantanée et implique que la masse à réticuler peut continuer à durcir même lors du stockage et surtout lorsque les cadences d'enduction sont rapides. Ainsi, les supports souples enduits de silicones durcis peuvent continuer d'évoluer dans le temps au niveau de la réticulation, ce qui se traduit par une adhérence indésirable entre deux supports souples enduits mis en contact ou entre deux zones du même support souple mises en contact. Ce phénomène est connu sous le nom de « blocking » et entraine la nécessité d'exercer une force plus importante pour dérouler ou isoler le produit fini ou semi-fini lorsque celui-ci est déstocké. Ce phénomène est à la source de nombreuses malfaçons dues à une détérioration du matériau silicone durci par arrachement du matériau silicone ou par apparition de fractures dans la masse de l'élastomère silicone durci.

L'art antérieur dans le domaine des silicones traitant des problèmes de « blocking » liés à l'enduction de compositions silicones réticulables par des réactions de condensation sur des supports souples est très peu fourni voire inexistant.

Un autre challenge à adresser pour l'utilisation de compositions silicones liquides et réticulables par condensation est lié au besoin pour certaines applications de former sur des supports souples des couches minces en élastomère silicone les plus transparentes possibles.

Un état de l'art traitant des propriétés de transparence pour des élastomères silicones solides obtenus par condensation est la demande de brevet US-2011/0028646-A1. Cette référence décrit des catalyseurs de condensation présentant des propriétés de transparence (non jaunissant) choisis parmi le groupe constitué par sels métalliques à partir des métaux suivants : Li, Na, K, Mg, Ca et Sr. Les carboxylates correspondants à ces métaux sont préférés et surtout les carboxylates de Li et Sr, notamment l'octoate de lithium [Li(oct)] et l'octoate de strontium [Sr(oct)₂] qui sont en support des exemples et qui font intervenir des ligand carboxylates en C₈. Cependant, bien que cette publication ne traite pas de problème de « blocking » lors de l'enduction de ce type de composition sur supports souples, il a été vérifié par les inventeurs de la présente demande que les types de catalyseur exemplifiés ne permettent pas d'obtenir des revêtement silicones solides exempt de « blocking» au stockage lorsqu'ils sont utilisés pour l'enduction sur des supports souples.

Les catalyseurs à base de titane, également très employés dans les RTV-1, présentent aussi d'autres inconvénients majeurs car ils ont une cinétique plus lente que les catalyseurs à base d'étain, avec des problèmes de jaunissement et sont plus difficilement utilisables dans les RTV-2 du fait de problèmes de gélification. D'autres catalyseurs sont parfois mentionnés comme les catalyseurs à base de zinc, de zirconium ou d'aluminium, mais ils n'ont connus qu'un faible développement industriel en raison de leur médiocre efficacité.

C'est pour les raisons évoquées ci-dessus que les catalyseurs à base d'alkylétain sont toujours très largement utilisés car ils sont très efficaces, le plus souvent incolores, liquides et solubles dans les huiles silicones. Cependant, il est reconnu à présent qu'ils présentent l'inconvénient d'être toxiques (CMR2 toxiques pour la reproduction). Pour un développement durable, il apparaît donc nécessaire de développer des catalyseurs non toxiques pour l'enduction sur support souple de compositions liquides de silicones durcissables par des réactions de condensation pour former des revêtements silicones solides (ou « élastomères silicones »).

Dans ce contexte, l'un des objectifs essentiels de la présente invention est de mettre au point un procédé d'enduction d'une composition silicone liquide et réticulable par des réactions de condensation pour former un élastomère silicone solide par des réactions de condensation sur un support souple permettant d'obtenir des support souple enduits d'élastomères silicones solides qui ne présentent pas de problème de « blocking » au stockage.

Un autre objectif de la présente invention est permettre d'obtenir des supports souples enduits par un élastomère silicone solide qui sont translucides ou transparents.

Un autre objectif essentiel de la présente invention est de fournir un procédé mettant en oeuvre une composition silicone ne contenant pas de composés chimiques toxiques, et en particulier ne contenant pas de catalyseurs à base d'étain.

Un autre objectif essentiel de cette invention est de fournir un support souple enduit sur une ou deux faces de manière continue ou discontinue d'un élastomère silicone solide ne présentant plus de problème de « blocking » au stockage.

Un autre objectif essentiel de la présente invention est de fournir une composition silicone liquide et réticulable par condensation ne contenant pas de catalyseurs à base d'étain et lorsqu'elle est enduite sur un support souple permet d'obtenir un support souple enduit ne présentant pas de problème de « blocking » au stockage

Tous ces objectifs, parmi d'autres, sont atteints par la présente invention qui concerne un procédé d'enduction d'une composition silicone **(X)** liquide et réticulable par des réactions de condensation pour former un élastomère silicone solide sur un support souple **(S)** comprenant les étapes a), b) et c) suivantes :
a) on prépare une composition silicone **(X)** liquide et réticulable par des réactions de condensation comprenant :
   - au moins un composé organosilicié **(A)** comprenant au moins deux groupements hydrolysables et condensables, identiques ou différents, ou au moins deux fonctions silanol ≡SiOH,
   - au moins un agent de réticulation **(B),**
   - éventuellement au moins une charge **(C),** et
   - une quantité catalytiquement efficace d'au moins un catalyseur **(M)** qui est un complexe de magnésium comprenant dans sa structure deux ligands carboxylate, identiques ou différents, comprenant de 10 à 32 atomes de carbone, et de préférence de 10 à 20 atomes de carbone,
b) sur un support souple **(S),** qui peut éventuellement être préalablement recouvert sur une ou deux faces d'une ou plusieurs couche(s) d'un matériau polymère, on dépose de manière continue ou discontinue ladite composition silicone **(X)** sur une face dudit support souple **(S)** ou éventuellement sur les deux faces dudit support souple **(S),** et
c) on laisse réticuler ladite composition silicone **(X)** en présence d'humidité apportée par l'air ambiant ou par une exposition à de la vapeur d'eau, ou par addition préalable d'eau dans ladite composition silicone **(X)** de manière à former un élastomère silicone solide réticulé.

Pour atteindre cet objectif, la Demanderesse a eu le mérite de mettre en évidence, de manière tout à fait surprenante et inattendue, que le choix d'une famille de composés spécifiques qui sont des carboxylates de magnésium comprenant de 10 à 32 atomes de carbones permet de s'affranchir des problèmes de « blocking » au stockage lorsqu'ils sont utilisés comme catalyseur de condensation des compositions silicones enduites sur des supports souples.

Ceci est particulièrement surprenant sachant que des complexes ayant des structures chimiques très proches tels que :
- un carboxylate de magnésium en Ce (magnésium bis-2-éthylhexanoate, catalyseur (C-1) dans les exemples comparatifs de la présente demande),
- un carboxylate de strontium en C₈ (bis(éthyl-2-hexanoate) de strontium, catalyseur (C-4) dans les exemples comparatifs de la présente demande),
- un carboxylate de calcium en C₁₀ (calcium bis-néodécanoate, catalyseur (C-2) dans les exemples comparatifs de la présente demande), ou
- un carboxylate de lithium en C₁₀ (lithium néodécanoate, catalyseur (C-3) dans les exemples comparatifs de la présente demande) ;
ne permettent pas de résoudre ces problèmes de « blocking » au stockage des supports souples enduits. Ainsi, l'utilisation d'un carboxylate de calcium en C₁₀ comme catalyseur de condensation ne permet pas de résoudre le problème de « blocking » décrit ci-dessus alors que le calcium est un élément chimique appartenant à la même colonne (IIA) du tableau périodique que celle de l'élément chimique magnésium (Mg).

L'utilisation du catalyseur **(M)** selon l'invention permet aussi d'obtenir des élastomères silicones solides transparents ou translucides ce qui présente des avantages certains lorsqu'ils sont utilisés pour former des revêtements solides sur des supports transparents ou translucides. C'est-à-dire que l'utilisation du catalyseur **(M)** selon l'invention n'entraine pas de colorations résiduelles telles que celles observées par exemple avec des catalyseurs à base de titane (coloration jaune).

Par « transparent », on entend que le matériau laisse totalement passer la lumière, sans la diffuser ni l'absorber (ou très peu), c'est à dire que l'on peut distinguer nettement à travers le matériau.

Par « translucide », on entend que le matériau laisse partiellement passer la lumière sans pour autant permettre de distinguer nettement à travers le matériau.

Il est entendu que le terme « complexe » inclue dans sa définition toute forme monomérique, oligomérique ou analogue dudit complexe de magnésium selon l'invention.

Les catalyseurs selon l'invention sont soit disponibles commercialement ou soit préparés en faisant réagir par exemple un ou plusieurs alcoxyde de magnésium, par exemple le méthoxyde de magnésium Mg(OCH₃)₂ ou l'éthoxyde de magnésium Mg(OC₂H₅)₂, avec un acide carboxylique en C₁₀ à C₃₂ souhaité, éventuellement en présence d'un solvant, tel qu'un solvant aromatique comme le toluène ou le xylène. Il est également possible d'utiliser comme précurseur l'oxyde ou l'hydroxyde de magnésium.

Eventuellement, le ou les catalyseur(s) selon l'invention peuvent être utilisés en présence d'autres catalyseurs de condensation tels que des carboxylates de zinc ou un alcoxyde ou chélate de titane.

Selon un mode de réalisation préféré du procédé selon l'invention, à l'étape b) on dépose une quantité suffisante de ladite composition silicone **(X)** de manière à former soit un cordon soit une couche continue sur ledit support souple **(S).**

Selon un autre mode de réalisation préféré du procédé selon l'invention, à l'étape c) on laisse réticuler ladite composition silicone **(X)** en présence d'humidité apportée par l'air ambiant ou par une exposition à de la vapeur d'eau, ou par addition préalable d'eau dans ladite composition silicone **(X)** à une température comprise entre 20 et 90°C, de préférence entre 40 et 90°C, ét encore plus préférentiellement entre 50 et 90°C. Pour cela, il est particulièrement avantageux d'utiliser une enceinte climatique qui aura l'avantage de maintenir à la fois une température du milieu ambiant constante et de contrôler le taux d'humidité.

Par « humidité » on entend la présence d'eau ou de vapeur d'eau dans l'air.

Selon un autre mode de réalisation de l'invention, lorsque l'humidité est apportée par une exposition à de la vapeur d'eau, par exemple par un dispositif de jet de vapeur, une étape d) peut être mise en oeuvre après l'étape c) et consiste à faire passer le support souple enduit issu de l'étape c) dans un four chaud et dont l'air est sec (avec une température pouvant être supérieure à 100°C si la nature du support le permet ou comprise entre 50 et 100°C). Cette étape supplémentaire permet ainsi de compléter la réticulation du revêtement silicone par condensation des fonctions réactives préalablement hydrolysées. Par air sec, on entend que l'humidité relative au sein du four est inférieur proche de zéro % ou inférieure à 0,1%.

Selon le procédé selon l'invention, il est avantageux d'utiliser une enceinte climatique maintenant une température entre 70 et 90°C et avec un taux d'humidité relative (HR) maintenu entre 5 et 45 %, de préférence entre 15 et 25% et encore plus préférentiellement à 20 % d'humidité relative.

Par « quantité suffisante » on entend la quantité exprimée en gramme par unité de surface du support souple **(S)** à enduire (le plus souvent exprimée en g/m²) de manière à former soit une couche ou un revêtement, soit un cordon selon les applications visées. L'homme du métier sait ajuster cette quantité suivant l'épaisseur souhaitée du revêtement et suivant le type de support souple.

Par exemple, lorsque le support souple **(S)** est en papier, la composition **(X)** peut être enduite à hauteur de 0,5 à 5 g/m², et de préférence de 0,6 à 2 g/m², la quantité variant suivant l'épaisseur du revêtement souhaitée. A titre indicatif une enduction de 1 g/m² sur ce type de support formera après enduction un revêtement d'environ 1 µm.

Lorsque le support souple **(S)** est en polyamide, la composition **(X)** peut être enduite à hauteur de 10 à 40 g/m², la quantité variant suivant l'épaisseur du revêtement souhaitée.

Lorsque le support souple est une dentelle et que l'on souhaite l'enduire de manière à former un cordon en silicone solide réticulé, le taux de dépôt de la composition **(X)** est adapté de manière à ce que l'épaisseur de la couche de la composition **(X)** déposée sur cette dentelle soit comprise entre 0,20 et 0,50 mm.

La quantité de catalyseur **(M)** selon l'invention est généralement comprise entre 0,05 et 10 % en poids par rapport au poids total de la composition, de préférence entre 0,10 et 5 % et encore plus préférentiellement entre 0,15 et 1 % en poids par rapport au poids total de la composition.

Selon une variante préférée, le catalyseur **(M)** peut être ajouté à la composition **(X)** sous une forme diluée dans un solvant organique tel que par exemple : le toluène, le xylène, la méthylisobutylcétone ou l'acide néodécanoique.

Selon un mode de réalisation préféré, le catalyseur **(M)** est un complexe de formule **(1)** suivante :

[Mg (C¹)ₓ (C²)_{y}] **(1)**

dans laquelle :
- les symboles C¹ et C² sont des ligands, identiques ou différents, choisis dans le groupe des carboxylates comprenant de 10 à 32 atomes de carbone, de préférence de 10 à 20 atomes de carbone et encore plus préférentiellement de 10 à 15 atomes de carbone,
- les symboles x et y représentent le nombre de ligands carboxylates et sont des nombres entiers égaux à 0, 1 ou 2 avec la condition que la somme x+ y = 2.

Selon un autre mode réalisation préféré, le catalyseur **(M)** est un complexe de formule **(2)** suivante :

[Mg (C¹)₂] **(2)**

dans laquelle :
- le symbole C¹ est un ligand choisi dans le groupe des carboxylates comprenant de 10 à 32 atomes de carbone, de préférence de 10 à 20 atomes de carbone et encore plus préférentiellement de 10 à 15 atomes de carbone,

Selon un autre mode de réalisation préféré, les ligands carboxylates sont choisis parmi le groupe constitué par :
- les anions: décanoate [CH₃-(CH₂)₈-COO]⁻, undécanoate [CH₃-(CH₂)₉-COO]⁻, dodécanoate ou laurate [CH₃-(CH₂)₁₀-COO]⁻, tridécanoate [CH₃-(CH₂)₁₁-COO]⁻, tétradécanoate ou myristate [CH₃-(CH₂)₁₂-COO]⁻, pentadécanoate [CH₃-(CH₂)₁₃-COO]⁻, hexadécanoate ou palmitate [CH₃-(CH₂)₁₄-COO]⁻, heptadécanoate [CH₃-(CH₂)₁₅-COO]⁻, octadécanoate ou stéarate [CH₃-(CH₂)₁₆-COO]⁻, nonadécanoate [CH₃-(CH₂)₁₇-COO]⁻, éicosanoate [CH₃₋(CH₂)₁₈-COO]⁻, hénéicosanoate [CH₃-(CH₂)₁₉-COO]⁻, docosanoate ou béhénate [CH₃-(CH₂)₂₀-COO]⁻, tricosanoate [CH₃-(CH₂)₂₁-COO]⁻, tétracosanoate ou lignocérate [CH₃-(CH₂)₂₂-COO]⁻, pentacosanoate [CH₃₋(CH₂)₂₃-COO]⁻, hexacosanoate [CH₃-(CH₂)₂₄-COO]⁻, acide heptacosanoate [CH₃-(CH₂)₂₅-COO]⁻, octacosanoate [CH₃-(CH₂)₂₆-COO]⁻, nonacosanoate [CH₃-(CH₂)₂₇-COO]⁻, triacontanoate [CH₃-(CH₂)₂₈-COO]⁻, hentriacontanoate [CH₃-(CH₂)₂₉-COO]⁻, dotriacontanoate [CH₃-(CH₂)₃₀-COO]⁻, palmitoléate [CH₃-(CH₂)₅-CH=CH-(CH₂)₇-COO]⁻, oléate [CH₃(CH₂)₇CH=CH(CH₂)₇COO]⁻, linoléate [CH₃-(CH₂)₄-(CH=CHCH₂)₂-(CH₂)₆-COO]⁻, linolénate [CH₃-CH₂-(CH=CHCH₂)₃-(CH₂)₆-COO]⁻ et arachidonate [CH₃-(CH₂)₄-(CH=CHCH₂)₄-(CH₂)₂-COO]⁻,
- les anions: 7,7-diméthyloctanoate [(CH₃)₃C-(CH₂)₅-COO]⁻, 2,2-diméthyloctanoate [CH₃-(CH₂)₅-C(CH₃)₂-COO]⁻, 2,2,3,5-tétraméthylhexanoate [(CH₃)₂CH-CH₂-CH(CH₃)-C(CH₃)₂-COO]⁻, 2,5-diméthyl-2-éthylhexanoate [(CH₃)₂CH-(CH₂)₂-C(CH₃)(C₂H₅)-COO]⁻, 2,2-diéthylhexanoate [CH₃-(CH₂)₃-C(C₂H₅)₂-COO]⁻, 2,4-diméthyl-2-isopropylpentanoate [(CH₃)₂CH-CH₂-C(CH₃)(i-propy)-COO]⁻, et
- les anions naphthénates en C₁₀ à C₂₀ et de préférence en C₁₀ à C₁₅.

Selon un mode de réalisation particulièrement avantageux, les ligands carboxylates sont choisis parmi le groupe constitué par les carboxylates de formule brute [C₁₀H₁₉O₂]⁻ et les naphthénates en C₁₀ à C₂₀ et de préférence en C₁₀ à C₁₅.

Il est particulièrement avantageux d'utiliser comme catalyseur **(M)** le complexe [Mg(néodécanoate)2] ou le complexe [Mg(naphthénate)₂] avec l'anion naphthénate ayant une structure chimique en C₁₀ à C₂₀ et de préférence en C₁₀ à C₁₅.

Les ligands naphthénates en C₁₀ à C₂₀ sont les anions correspondant des acides naphthéniques. Les acides naphthéniques sont des sous-produits de l'extraction des sables bitumineux et se retrouvent principalement dans les résidus de sables bitumineux. Les mélanges commerciaux d'acides naphthéniques sont utilisés comme solvants, détergents et agents de récupération de caoutchouc. Il peut s'agir de mélange d'acides carboxyliques monocycliques et/ou bicycliques. Ceux concernés par l'invention sont constitués de 10 à 32 atomes de carbones. Un ligand naphthénate particulièrement utile selon l'invention est l'anion obtenu à partir d'un mélange technique d'acides carboxyliques ayant des structures de type alkylcyclopentane et constitués en moyenne de 14 à 15 atomes de carbone tels que par exemple les acides carboxylique cyclopentyl-(CH₂)₈₋₉-COOH.

Selon un mode de réalisation préféré, la composition silicone **(X)** liquide et réticulable par des réactions de condensation ne contient pas de catalyseur ayant dans sa structure au moins un atome d'étain.

Selon un mode de réalisation préféré, le support souple **(S)** est en textile, en papier, en polychlorure de vinyle, en polyester, en polypropylène, en polyamide, en polyéthylène, en polyuréthanne, en tissus de fibres de verre non tissés ou en polyéthylène téréphtalate.

On entend par textile au sens de l'invention, un terme générique englobant toutes les structures textiles. Les textiles peuvent être constitués par des fils, fibres, filaments et/ou autres matières. Ils comprennent notamment les étoffes souples, qu'elles soient tissées, collées, tricotées, tressées, en feutre, aiguilletées, cousues, ou réalisées par un autre mode de fabrication.

Ces textiles peuvent être ajourés, c'est à dire comprendre des espaces libres non constitués de textile. Pour que l'enduction de la composition silicone de l'invention soit efficace, il est préférable que la plus petite des dimensions de ces espaces libres soit inférieure à 5 mm, notamment inférieurs à 1 mm. Selon l'invention, tout type de support souple **(S)** en textile peut être utilisé. A titre indicatif, on peut citer :
- les textiles naturels, tels que : les textiles d'origine végétale, comme le coton, le lin, le chanvre, la jute, la coco, les fibres cellulosique du papier ; et les textiles d'origine animale, comme la laine, les poils, le cuir et les soies ;
- les textiles artificiels, tels que : les textiles cellulosiques, comme la cellulose ou ses dérivés ; et les textiles protéiniques d'origine animale ou végétale ; et
- les textiles synthétiques, tels que le polyester, le polyamide, les alcools polymalliques, le chlorure de polyvinyle, le polyacrylonitrile, les polyoléfines, l'acrylonitrile, les copolymères (méth)acrylate-butadiène-styrène et le polyuréthane.

Les textiles synthétiques obtenus par polymérisation ou polycondensation peuvent notamment comprendre dans leur matrice différents types d'additifs, tels que des pigments, des délustrants, des matifiants, des catalyseurs, des stabilisants thermiques et/ou lumière, des agents anti-statiques, des ignifugeants, des agents anti-bactériens, anti-fongiques, et/ou anti-acariens.

Comme type de surfaces textiles, on peut citer notamment les surfaces obtenues par entrecroisement rectiligne des fils ou tissus, les surfaces obtenues par entrelacement curviligne des fils ou tricots, les surfaces mixtilignes ou tulles, les surfaces non tissées et les surfaces composites. Parmi la multitude de surfaces textiles possibles utilisables dans le procédé selon l'invention, on peut mentionner : les feutres, les denims, les tissés jacquards, les aiguilletés, les cousus, les crochetés, les grenadines, les dentelles et dentelés, les damas, les voiles, les alpagas, les barathéas, les basins, les bouclés, les brocarts, les calicots, les velours, les canevas, les chiffons, les flockés, les encollés, les étamines, les tressés, les failles, les foulards, les gazes, les géotextiles, les jaspés, les matelassés, les touffetés, les organzas, les plissés, les rubans et les toiles.

Le support souple **(S)** en textile utilisé dans le procédé de la présente invention peut être constitué d'un ou plusieurs textiles, identiques ou différents, assemblés par diverses manières. Le textile peut être mono- ou multi-couche(s). Le support textile peut par exemple être constitué d'une structure multicouche pouvant être réalisé par différents moyens d'assemblage, tels que des moyens mécaniques comme la couture, le soudage, ou le collage par point ou continu.

Le support souple **(S)** en textile peut, outre le procédé d'enduction selon la présente invention, subir un ou plusieurs autres traitements subséquents, également appelés traitement de finition ou d'ennoblissement. Ces autres traitements peuvent être effectués avant, après et/ou pendant ledit procédé d'enduction de l'invention. Comme autres traitements subséquents, on peut notamment citer : la teinture, l'impression, le contrecollage, l'enduction, l'assemblage avec d'autres matériaux ou surfaces textiles, le lavage, le dégraissage, le préformage ou le fixage.

Selon une disposition préférée de réalisation de l'invention, le support souple **(S)** est un textile et de préférence une dentelle ou une bande élastique.

De préférence, à l'étape b) du procédé selon l'invention, on dépose ladite composition silicone **(X)** liquide et réticulable par des réactions de condensation sur un support souple **(S)** qui est un textile par transfert, par rouleau lécheur ou par pulvérisation à l'aide d'une buse, d'une racle, d'un cadre rotatif ou d'un rouleau inverse « reverse roll ».

Un exemple d'utilisation de rouleaux lécheurs qui sont particulièrement avantageux selon l'invention est décrit dans la demande de brevet EP-1979521-A1. Cette technique est particulièrement bien adaptée à l'imprégnation de l'une des faces d'une surface textile complexe par un produit fluide, notamment réactif ou présentant une sensibilité à l'atmosphère environnante. Cette technique est basée sur l'utilisation d'un cylindre lécheur perforé fixe, ie. ne roulant pas, dispensant par le biais d'une batterie d'orifices disposés sur une ou plusieurs génératrices du cylindre la quantité appropriée de liquide d'imprégnation directement sur l'une des faces de la surface textile.

Aussi, on peut envisager :
- une enduction continue par dépose directe sur supports textiles ou autres. Ces déposes sont de types bandes droites ou sinusoïdales, grilles ou points ; ou
- une enduction continue par dépose transfert qui permet d'obtenir des couches de silicone extrêmement fines avec différents états de surfaces ce qui permet également l'application de silicone sur des supports délicats et de ce fait difficiles à mettre en oeuvre avec un procédé d'enduction directe.

Selon un mode de réalisation particulier, lorsque le procédé selon l'invention est utilisé dans l'impression de tissus par sérigraphie, la composition **(X)** selon l'invention peut-être diluée dans un solvant de silicone (par exemple un solvant issu de coupes pétrolières), et enduit par sérigraphie sur un tissu (support souple **(S)**). Les quantités sont généralement choisies de manière à former une couche assez mince (< 1 mm). Ensuite on procède à l'étape c) du procédé selon l'invention (la température ambiante et le taux d'humidité relative variant suivant les saisons et les zones géographiques où a lieu l'enduction).

Un autre objet de l'invention concerne un support souple **(S)** enduit sur une ou deux faces de manière continue ou discontinue d'un élastomère silicone solide susceptible d'être obtenu par le procédé selon l'invention et tel que décrit ci-dessus.

Un autre objet de l'invention concerne un matériau composite comprenant :
- un support souple **(S)** qui peut éventuellement être recouvert sur une ou deux faces d'une ou plusieurs couche(s) d'un matériau polymère, et
- un revêtement sur le dit support souple ou sur ledit matériau polymère constitué d'un élastomère silicone solide obtenu selon le procédé de l'invention tel que défini ci-dessus.

Les textiles ainsi obtenus, tels quels ou transformés en articles textiles, peuvent être utilisés dans de nombreuses applications, telles que, par exemple, dans le domaine de l'habillement, notamment la lingerie comme les dentelles de hauts de bas ou de soutien-gorge, et les articles d'hygiène, tels que des bandes de contention ou des pansements.

Selon un mode de réalisation particulier, le composé organosilicié **A** est un polyorganosiloxane comprenant :
(i) au moins deux motifs siloxyles de formule **(3)** suivante : 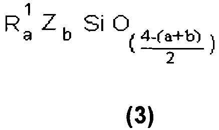 dans laquelle :
   - les symboles R¹, identiques ou différents, représentent des radicaux hydrocarbonés monovalents en C₁ à C₃₀,
   - les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy,
   - a est égal à 0, 1 ou 2, b est égal à 1, 2 ou 3, la somme a + b est égale à 1, 2 ou 3, et éventuellement
(ii) un ou plusieurs motif(s) siloxyle(s) de formule **(4)** suivante : 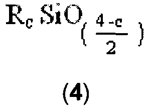 dans laquelle :
   - les symboles R, identiques ou différents, représentent des radicaux hydrocarbonés monovalent en C₁ à C₃₀ éventuellement substitués par un ou plusieurs atomes d'halogène ou par des groupements : amino, éther, ester, époxy, mercapto ou cyano, et
   - le symbole c est égal à 0, 1, 2 ou 3.

La viscosité dynamique à 25°C du composé organosilicié **A** peut varier suivant le type de support souple **S** entre 10 et 1 x10⁶ mPa.s et de préférence entre 10 et 300000 mPa.s.

Toutes les viscosités dont il est question dans le présent mémoire correspondent à une grandeur de viscosité dynamique qui est mesurée, de manière connue en soi, à 25°C, avec un appareil de type Brookfield. S'agissant de produits fluides, la viscosité dont il est question dans le présent exposé est la viscosité dynamique à 25°C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.

Des exemples de composés organosilicié **A** utiles selon l'invention sont :
- un polydiorganosiloxane α,ω-hydroxylé de formule **(A'):** 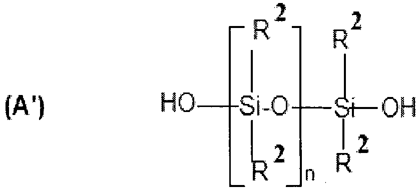 dans laquelle :
   - les substituants R², identiques ou différents, représentent chacun un radical monovalent hydrocarboné saturé ou non en C₁ à C₁₃, substitué ou non substitué, aliphatique, cyclanique ou aromatique et de préférence les symboles R² sont des groupes méthyles ; et
   - avec 1 ≤ n ≤ 4200 et de préférence 2 ≤ n ≤ 1500 ; ou
- un polyorganosiloxane linéaire réticulable de formule **(5)** suivante : 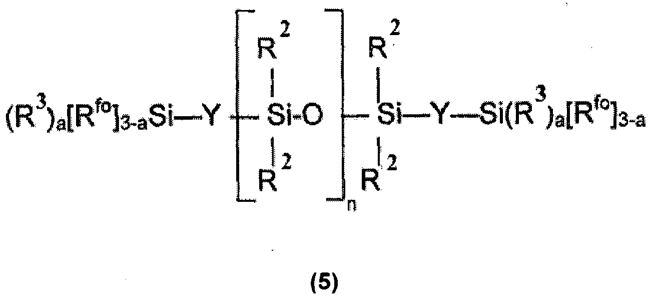 dans laquelle :
   - les substituants R², identiques ou différents, représentent chacun un radical monovalent hydrocarboné saturé ou non en C₁ à C₁₃, substitué ou non substitué, aliphatique, cyclanique ou aromatique ; et de préférence les symboles R² sont des groupes méthyles ;
   - les substituants R³, identiques ou différents, représentent chacun un radical monovalent hydrocarboné saturé ou non en C₁ à C₁₃, substitué ou non substitué, aliphatique, cyclanique ou aromatique ; et de préférence les symboles R³ sont des groupes méthyles ;
   - les substituants de fonctionnalisation R^{fo}, identiques ou différents, représentent chacun :
      - un reste iminoxy de formule : (R⁴)₂C=N-O-
         avec R⁴ représentant indépendamment, un alkyle linéaire ou ramifié en C₁ à C₈, un cycloalkyle en C₃ à C₈, un alcényle en C₂-C₈ ;
      - un reste alkoxy de formule : R⁵O(CH₂CH₂O)_{b} -
         avec R⁵ représentant indépendamment, un alkyle linéaire ou ramifié en C₁ à C₈, un cycloalkyle en C₃ à C₈ et b = 0 ou 1 ;
      - un reste acyloxy de formule : 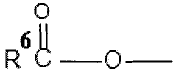 avec R⁶ représentant un radical monovalent hydrocarboné saturé ou non en C₁ à C₁₃, substitué ou non substitué, aliphatique, cyclanique ou aromatique ;
      - un reste enoxy de formule :

         (H)_{b'}(R⁶)_{2-b'}C=C(-O-)R⁶

         ou R⁶ est tel que défini ci-dessus et b' = 0, 1 ou 2 ;
   - chaque symbole Y représente un atome d'oxygène ou un groupe divalent hydrocarboné ; et
   - n a une valeur suffisante pour conférer au composé organosilicié **A** une viscosité dynamique à 25°C allant de 10 à 1 x10⁶ mPa.s et de préférence entre 10 et 300000 mPa.s, et encore plus préférentiellement 1 ≤ n ≤ 4200 et de préférence 2 ≤ n ≤ 1500 n.

Selon un mode de réalisation préféré, en système monocomposant, la composition **(X)** selon l'invention correspond à une forme de réalisation dans laquelle un des constituants essentiels, à savoir le composé organosilicié **A** est fonctionnalisé au niveau de ses extrémités par les méthodes suivantes :
- quand Y représente un atome d'oxygène : réalisation d'une réaction de condensation entre les motifs =Si-OH terminaux d'un polyorganosiloxane α,ω-hydroxylé **A'** précurseur, décrit ci-dessus, et une fonction R^{fo} d'un silane portant les fonctions R^{fo} décrites ci-dessus; et
- quand Y représente un groupe divalent hydrocarboné : réalisation d'une réaction d'addition entre les motifs ≡Si-H terminaux d'un polyorganosiloxane α,ω-hydrogéno **A"** précurseur et un silane oléfinique portant les fonctions R^{fo} ; ou alternativement réaction d'addition entre les extrémités insaturées (par exemple vinylique ou allylique) d'un polyorganosiloxane **A'''** et un hydrogénosilane portant les fonctions R^{fo}.

Le composé organosilicé **A** est fonctionnalisé selon des techniques connues de l'homme du métier. Le composé organosilicé **A** fonctionnalisé correspond à un mode de réalisation dans lequel la composition (X) est stable, en absence d'humidité. En pratique, cette forme stable est celle d'une composition conditionnée en cartouches ou containers hermétiquement fermé(e)s, qui seront ouvert(e)s par l'opérateur lors de l'utilisation et qui lui permettront d'alimenter la machine à enduction des supports souples visés par le procédé selon l'invention.

Le précurseur hydrogéno **A"** du composé organosilicé **A** fonctionnalisé par des groupements R^{fo} en bouts de chaîne est un polydiorganosiloxane α,ω-hydrogéno de formule: 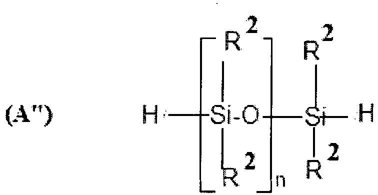 dans laquelle :
- les substituants R², identiques ou différents, représentent chacun un radical monovalent hydrocarboné saturé ou non en C1 à C13, substitué ou non substitué, aliphatique, cyclanique ou aromatique ; et de préférence les symboles R2 sont des groupes méthyles ; et
- n a une valeur suffisante pour conférer au composé organosilicié **A** une viscosité dynamique à 25°C allant de 5 à 5000 mPa.s, et de préférence entre 5 et 2000 mPa.s, et encore plus préférentiellement la valeur de n variera entre 5 et 1000, et de préférence entre 5 et 500.

Le précurseur **A'''** du composé organosilicé **A** fonctionnalisé par des groupements R^{fo} en bouts de chaîne est un polydiorganosiloxane répondant à la définition donnée ci-dessus pour **A"** à la différence que les atomes d'hydrogène terminaux sont remplacés par des groupes insaturés (tels que des groupes vinyles ou allyles) et que n a une valeur suffisante pour conférer au composé organosilicié **A** une viscosité dynamique à 25°C allant de 5 à 1x10⁶ mPa.s, et de préférence entre 5 et 150000 mPa.s, et encore plus préférentiellement la valeur de n variera entre 5 et 5000, et de préférence entre 5 et 1500.

La composition **(X)** lorsqu'elle est formulée en monocomposant (RTV-1) peut être du type acide (dans ce cas, la fonctionnalisation R^{f0} représente un groupement acyloxy) ou bien encore du type neutre (dans ce cas, la fonctionnalisation R^{f0} représente un groupement alkoxy ou iminoxy ou énoxy).

Selon un mode de réalisation particulier, l'agent de réticulation **B** est de préférence un composé de silicium dont chaque molécule comprend au moins trois groupements hydrolysables et condensables **Y** et ledit agent de réticulation **B** ayant la formule **(5)** suivante :

R'₍₄₋ₐ₎SiYₐ **(5)**

- dans laquelle :
   i. le symbole R' est un radical hydrocarboné monovalent comprenant de 1 à 30 atomes de carbone,
   ii. le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime, et
   iii. le symbole a = 3 ou 4.

L'agent de réticulation **B** présente au moins trois groupements hydrolysables et condensables **Y** tel que les groupements de formules suivantes :
- acyloxy de formule -O-CO-R'
- alcoxy de formule -O-R'
- amino de formule -NR¹R²
- amido de formule -NR¹COR²
- alcényloxy de formule -O-CR¹=CHR²
- aminoxy de formule -O-NR¹R²
- cétiminoxy de formule -O-N=CR¹R² ou 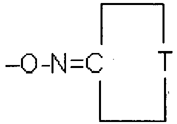
- formules dans lesquelles : R' représente un radical alkyle ou aryle ayant de 1 à 15 atomes de carbone, R¹ et R², identiques ou différents, représentent des radicaux alkyle ou aryle contenant de 1 à 8 atomes de carbone et T un radical alkylène contenant de 4 à 8 atomes de carbone. Parmi les radicaux R', R¹ et R², on peut citer tout particulièrement les radicaux: méthyle, éthyle, cyclohexyle et phényle. Parmi les radicaux T on peut citer tout particulièrement ceux de formule : -(CH₂)₄ -, -(CH₂)₅- et -(CH₂)₆-.

A titre d'exemple d'alcoxysilanes, on peut citer ceux de formule :

Si(OCH₃)₄

Si(OCH₂CH₃)₄

Si(OCH₂CH₂CH₃)₄

(CH₃O)₃SiCH₃

(C₂H₅O)₃SiCH₃

(CH₃O)₃Si(CH=CH₂)

(C₂H₅O)₃Si(CH=CH₂)

(CH₃O)₃Si(CH₂-CH=CH₂)

(CH₃O)₃Si[CH₂-(CH₃)C=CH₂]

(C₂H₅O)₃Si(OCH₃)

Si(OCH₂-CH₂-OCH₃)₄

CH₃Si(OCH₂-CH₂-OCH₃)₃

(CH₂=CH)Si(OCH₂CH₂OCH₃)₃

C₆H₅Si(OCH₃)₃

C₆H₅Si(OCH₂-CH₂-OCH₃)₃.

Les réticulants cétiminoxysilane sont bien connues depuis longtemps. Ils sont par exemple décrits dans les brevets français FR-A-1 314 649, FR-A-1 371 250, américains US-A-3 678 003 et US-A-3 986 999, dans le brevet britannique GB-A-1 468 467, dans le brevet belge BE-A-901 479 et dans le brevet européen EP-A-157 580.

A titre d'exemple de cétiminoxysilanes, on peut citer ceux de formule : CH₃Si[-O-N=C(CH₃)₂]₃,

CH₃Si[-O-N=C(CH₃)C₂H₅]₃,

CH₂=CHSi[-O-N=C(CH₃)C₂H₅]₃,

C₆H₅Si[-O-N=C(CH₃)₂]₃,

CH₃Si[-O-N=C(C₂H₅)(CH₂)₃CH₃]₃,

(CH₃)₂C = N-O-]Si[-O-N=C(CH₃)C₂H₅]₃,

CH₃Si[-O-N =C(CH₃CH(C₂H₅)(CH₂)₃CH₃]₃,

CH₃Si[-O-N =C(CH₃CH(C₂H₅)(CH₂)₃CH₃]₃,

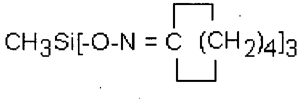

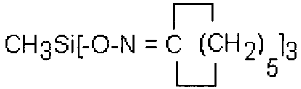

Les réticulants acyloxysilanes sont bien connus depuis longtemps. Ils sont décrits notamment dans les brevets US-A-3 077 465, US-A-3 382 205, US-A-3 701 753, US-A-3 957 714, US-A-4 115 356, US-A-4 273 698, FR-A-2 429 811 et FR-A-2 459 820.

A titre d'exemple d'acyloxysilanes, on peut citer ceux de formule :

CH₃Si(OCOCH₃)₃,

C₂H₅Si(OCOCH₃)₃

CH₂=CHSi(OCOCH₃)₃

C₆H₅Si(OCOCH₃)₃,

CH₃Si[OCOCH(C₂H₅)-(CH₂)₃-CH₃]₃

(CF₃CH₂CH₂)Si(OCOC₆H₅)₃

CH₃Si(OCOCH₃)₂[OCOCH(C₂H₅)-(CH₂)₃-CH₃]

(CH₃COO)Si[OCOCH(C₂H₅HCH₂)₃-CH₃]₃

A titre d'autres exemples d'agent de réticulation **B** on peut citer :
- les silanes et les produits d'hydrolyse partielle de ce silane de formule générale suivante :

   R¹ₖ Si(OR²)₍₄₋ₖ₎

   dans laquelle :
   - les symboles R², identiques ou différents, représentent des radicaux alkyles ayant de 1 à 8 atomes de carbone, tels que les radicaux méthyle, éthyle, propyle, butyle, pentyle, éthyl-2 hexyle, des radicaux oxyalkylènes en C₃-C₆, et
   - le symbole R¹ représente un groupe hydrocarboné aliphatique saturé ou insaturé, linéaire ou ramifié, un groupe carbocyclique, saturé ou insaturé et/ou aromatique, monocyclique ou polycyclique et k est égal à 0, 1 ou 2.

Comme autres exemples d'agent de réticulation **B,** on peut citer le polysilicate d'éthyle, ou le polysilicate de n-propyle.

On utilise généralement de 0,1 à 60 parties en poids d'agent de réticulation **B** pour 100 parties en poids du ou des composé(s) organosilicié(s) **(A)** susceptible de réticuler par condensation en un élastomère silicone solide.

De préférence, la composition silicone **(X)** présente une viscosité dynamique supérieure à 50000 mPa.s à 25°C et de préférence comprise entre 50000 et 300000 mPa.s à 25°C, ceci de manière à pouvoir aisément enduire la composition sur le support souple **(S).**

Comme charges **(C)** on peut utiliser des charges minérales qui sont des produits très finement divisés dont le diamètre particulaire moyen est inférieur à 0,1 µm Les charges **C,** de préférence les silices renforçantes sont généralement utilisées à raison de 1 à 150 parties, de préférence de 8 à 100 parties, pour 100 parties de composé organosilicié **A.** Elles sont choisies parmi les silices de combustion et les silices de précipitation. Elles ont une surface spécifique, mesurée selon les méthodes BET et CTAB, comprise entre 50 m²/g et 500 m²/g, de préférence comprise entre 70 m²/g et 500 m²/g, une dimension moyenne des particules primaires inférieure à 80 nanomètres et une densité apparente inférieure à 200 g/litre. Ces silices peuvent être incorporées telles quelles ou après avoir été traitées par des composés organosiliciques habituellement utilisés pour cet usage. Parmi ces composés figurent les méthylpolysiloxanes tels que l'hexaméthyldisiloxane, l'octaméthylcyclotétrasiloxane, des méthylpolysilazanes tels que l'hexaméthyldisilazane, l'hexaméthylcyclotrisilazane, des chlorosilanes tels que le diméthyldichlorosilane, le triméthylchlorosilane, le méthylvinyldichlorosilane, le diméthylvinylchlorosilane, des alcoxysilanes tels que le diméthyldiméthoxysilane, le diméthylvinyléthoxysilane, le triméthylméthoxysilane.

En plus des silices renforçantes ou à la place de celles-ci, on peut ajouter des charges minérales semi-renforçantes ou de bourrage. Ces charges sont plus grossières et ont un diamètre particulaire moyen supérieur à 0,1 µm. Ces charges sont représentées plus spécialement par le quartz broyé, les argiles calcinées, les silices de diatomées, le carbonate de calcium, éventuellement traité en surface, les oxydes de fer, de titane, de magnésium, d'aluminium, le sulfate de zinc et le sulfate de baryum. Elles sont généralement introduites à raison de 1 à 120 parties en poids pour 100 parties de composé organosilicié **A.** Ces charges minérales peuvent être utilisées telles quelles, c'est-à-dire non traitées ou traitées avec les composés organosiliciques mentionnés ci-avant dans le cas des silices renforçantes.

L'introduction des charges a pour but de conférer de bonnes caractéristiques rhéologiques pour la composition avant réticulation et mécaniques des élastomères découlant du durcissement des compositions conformes à l'invention.

En combinaison avec ces charges peuvent être utilisés des pigments minéraux et/ou organiques ainsi que des agents améliorant la résistance thermique (sels et oxydes de terres rares tels que les oxydes et hydroxydes cériques) et/ou la résistance à la flamme des élastomères. Par exemple on peut utiliser les coktails d'oxyde décrits dans la demande internationale WO 98/29488. Parmi les agents améliorant la résistance à la flamme peuvent être cités les dérivés organiques halogénés, les dérivés organiques du phosphore, les dérivés du platine tels que l'acide chloroplatinique (ses produits de réaction avec des alcanols, des éthers-oxydes), les complexes chlorure platineux-oléfines. Ces pigments et agents représentent ensemble au plus 20 % du poids des charges.

La composition selon l'invention peut aussi comprendre au moins un promoteur d'adhérence **(D)** tel que par exemple les composés organosiliciques portant à la fois :
(1) un ou des groupes hydrolysables liés à l'atome de silicium, et
(2) un ou des groupes organiques substitués par des radicaux comprenant un atome d'azote ou choisis dans le groupe des radicaux (méth)acrylate, époxy, et alcényle, et plus préférentiellement encore dans le groupe constitué par les composés suivants pris seul ou en mélange:
   vinyltriméthoxysilane (VTMO),
   3-glycidoxypropyl-triméthoxysilane (GLYMO),
   méthacryloxypropyltriméthoxysilane (MEMO),
   [H₂N(CH₂)₃]Si(OCH₂CH₂CH₃)₃,
   [H₂N(CH₂)₃]Si(OCH₃)₃
   [H₂N(CH₂)₃]Si(OC₂H₅)₃
   [H₂N(CH₂)₄]Si(OCH₃)₃
   [H₂NCH₂CH(CH₃)CH₂CH₂]SiCH₃(OCH₃)₂
   [H₂NCH₂]Si(OCH₃)₃
   [n-C₄H₉-HN-CH₂]Si(OCH₃)₃
   [H₂N(CH₂)₂NH(CH₂)₃]Si(OCH₃)₃
   [H₂N(CH₂)₂NH(CH₂)₃]Si(OCH2CH₂OCH₃)₃
   [CH₃NH(CH₂)₂NH(CH₂)₃]Si(OCH₃)₃
   [H(NHCH₂CH₂)₂NH(CH₂)₃]Si(OCH₃)₃ 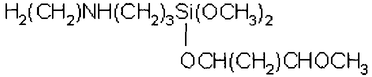 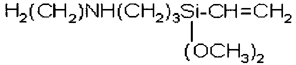
ou des oligomères polyorganosiloxaniques contenant de tels groupes organiques à une teneur supérieure à 20%.

Outre les constituants principaux, des polymères polyorganosiloxanes linéaires non réactifs **(E)** peuvent être introduits dans le dessein d'agir sur les caractéristiques physiques des compositions conformes à l'invention et/ou sur les propriétés mécaniques des élastomères issus du durcissement de ces compositions.

Ces polymères polyorganosiloxanes linéaires non réactifs **(E)** sont bien connus; ils comprennent plus spécialement: des polymères α,ω-bis(triorganosiloxy) diorganopolysiloxanes de viscosités d'au moins 10 mPa.s à 25°C, formés essentiellement de motifs diorganosiloxy et d'au plus 1 % de motifs monoorganosiloxy et/ou siloxy, les radicaux organiques liés aux atomes de silicium étant choisis parmi les radicaux méthyle, vinyle et phényle, 60 % au moins de ces radicaux organiques étant des radicaux méthyle. La viscosité de ces polymères peut dépasser un millions de mPa.s à 25°C. Ils comprennent donc des huiles d'aspect fluide à visqueux et des gommes molles à dures. Ils sont préparés selon les techniques usuelles décrites plus précisément dans les brevets français FR-A-978 058, FR-A-1 025 150, FR-A-1 108 764, FR-A-1 370 884. On utilise de préférence les huiles α,ω-bis(triméthylsiloxy) diméthylpolysiloxanes de viscosité allant de 10 mPa.s à 1 000 mPa.s à 25°C. Ces polymères qui jouent le rôle de plastifiants peuvent être introduits à raison d'au plus 70 parties en poids, de préférence de 5 à 20 parties en poids pour 100 parties en poids du composé organosilicié **A.**

Les compositions selon l'invention peuvent en outre avantageusement comprendre au moins une résine silicone **(F).** Ces résines silicones sont des polymères organopolysiloxanes ramifiés bien connus et disponibles dans le commerce. Elles présentent, par molécule, au moins deux motifs différents choisis parmi ceux de formule R'''₃SiO_{1/2} (motif M), R'''₂SiO_{2/2} (motif D), R'''SiO_{3/2} (motif T) et SiO_{4/2} (motif Q) avec au moins un des motifs étant un motif T ou Q. Les radicaux R'" sont identiques ou différents et sont choisis parmi les radicaux alkyles linéaires ou ramifiés, les radicaux vinyle, phényle, trifluoro-3,3,3 propyle. De préférence, les radicaux alkyles présentent de 1 à 6 atomes de carbone. Plus particulièrement, on peut citer comme exemples de radicaux R alkyles : les radicaux : méthyle, éthyle, isopropyle, tertiobutyle et n-hexyle. Ces résines sont de préférence hydroxylées et ont dans ce cas une teneur pondérale en groupe hydroxyle comprise entre 5 et 500 meq/100 g. Comme exemple de résines, on peut citer les résines MQ, les résines MDQ, les résines TD et les résines MDT.

D'autres agents auxiliaires et additifs usuels peuvent être incorporés à la composition selon l'invention ; ceux-ci sont choisis en fonction des applications dans lesquelles sont utilisées lesdites compositions.

La composition **(X)** selon l'invention peut comprendre les quantités suivantes :
- pour 100 parties en poids d'au moins un composé organosilicié **(A)** comprenant au moins deux groupements hydrolysables et condensables, identiques ou différents, ou au moins deux fonctions silanol ≡SiOH,
- de 0,1 à 60 parties en poids, de préférence de 1 à 15 parties en poids d'au moins un agent de réticulation **(B)** tel que défini ci-dessus,
- de 0 à 150 parties en poids d'au moins une charge **(C),** et de préférence de 1 à 150 parties en poids,
- de 0 à 20 parties en poids d'au moins un promoteur d'adhérence **(D),**
- de 0 à 150 parties en poids d'au moins un polymère polyorganosiloxane linéaires non réactifs **(E),**
- de 0 à 50 parties en poids d'au moins une résine silicone **(F),** et
- une quantité catalytiquement efficace d'au moins un catalyseur **(M)** qui est un complexe de magnésium comprenant dans sa structure deux ligands carboxylate, identiques ou différents, comprenant de 10 à 32 atomes de carbone, de préférence de 10 à 20 atomes de carbone, de préférence une quantité comprise entre 0,05 et 10 % en poids par rapport au poids total de la composition, et encore plus préférentiellement une quantité comprise entre 0,10 et 5 % en poids par rapport au poids total de la composition.

Lorsque le support souple **S** est un textile tel qu'une dentelle, il est particulièrement avantageux d'utiliser une composition **(X)** comprenant :
- pour 100 parties en poids d'au moins un composé organosilicié **(A)** comprenant au moins deux fonctions silanol ≡SiOH, et de préférence un polydiorganosiloxane α,ω-hydroxylé de formule **(A')** décrite ci-dessus dans laquelle les symboles R² sont des groupements méthyle et n est compris entre 3 et 2000, et de préférence compris entre 3 et 1000,
- de 0,1 à 60 parties en poids, de préférence de 1 à 15 parties en poids d'au moins un agent de réticulation **(B),** et encore plus préférentiellement de 1 à 15 parties en poids d'au moins un agent de réticulation **(B)** qui est un silane de formule **(5)** décrite ci-dessus avec le symbole R' étant un radical hydrocarboné monovalent comprenant de 1 à 30 atomes de carbone et le symbole Y étant un radical acyloxy de formule -O-CO-R', avec R' étant un radical alkyle ayant de 1 à 15 atomes de carbone,

- de 0 à 150 parties en poids d'au moins une charge **(C),** et de préférence de 1 à 50 parties en poids d'au moins une charge **(C),**
- de 0 à 20 parties en poids d'au moins un promoteur d'adhérence **(D),**
- de 0 à 150 parties en poids d'au moins un polymère polyorganosiloxane linéaires non réactifs **(E),** et de préférence de 1 à 50 parties en poids d'au moins un polymère polyorganosiloxane linéaires non réactifs **(E),**
- de 0 à 50 parties en poids d'au moins une résine silicone **(F),** et
- une quantité catalytiquement efficace d'au moins un catalyseur **(M)** qui est un complexe de magnésium comprenant dans sa structure deux ligands carboxylate, identiques ou différents, comprenant de 10 à 32 atomes de carbone, de préférence de 10 à 20 atomes de carbone, de préférence une quantité comprise entre 0,05 et 10 % en poids par rapport au poids total de la composition, et encore plus préférentiellement une quantité comprise entre 0,10 et 5 % en poids par rapport au poids total de la composition.

Selon une variante de l'invention, la composition **(X)** selon l'invention ne contient pas de catalyseur ayant dans sa structure au moins un atome d'étain.

La présente invention concerne aussi l'utilisation de la composition silicone **(X)** liquide et réticulable par des réactions de condensation selon l'invention et telle que définie ci-dessus pour enduire un support souple **(S).**

Un autre objet de l'invention concerne une composition silicone **(X)** liquide et réticulable par des réactions de condensation telle que définie ci-dessus.

Elle présente l'avantage de :
- pouvoir éviter les problèmes de blocking lorsqu'elle est enduite et réticuler sur un support souple **S,** et
- d'obtenir des élastomères silicones solides après réticulation au contact de l'humidité de l'air transparent ou translucide.

Un autre objet de l'invention concerne un élastomère silicone solide obtenu par réticulation en présence d'humidité apporté par l'air ambiant de la composition **(X)** telle que décrite ci-dessus.

Un autre objet de l'invention, l'invention concerne une composition monocomposante RTV-1 se présentant en un seul emballage **P** étanche à l'air et comprenant la composition **(X)** telle que décrite ci-dessus.

La composition monocomposante RTV-1 selon l'invention se présente en une seule partie. Elle est stable au stockage en l'absence d'eau et durcit en présence d'eau pour former un élastomère solide. Elle peut être fabriquée en mélangeant les différents constituants à l'abri de l'humidité, avec ou sans chauffage. Le catalyseur est de préférence incorporé à la fin. De préférence, le mélange est effectué sous pression réduite pour favoriser le départ des matières volatiles. Ainsi stockée en milieu confiné et à l'abri de la présence d'eau et d'humidité de l'air, la composition monocomposante RTV-1 selon l'invention est stable au stockage pendant plusieurs mois. Les compositions monocomposantes RTV-1, conformes à l'invention, sont utilisées telles quelles, c'est-à-dire non diluées, ou sous forme de dispersions dans des diluants, et sont stables au stockage en l'absence d'humidité ou d'eau et durcissent dès les basses températures (après départ des solvants dans le cas des dispersions) en présence d'eau pour former des élastomères silicones solides.

Un dernier objet de l'invention concerne une composition bicomposante RTV-2, précurseur de la composition **(X)** telle que définie ci-dessus, se présentant en deux emballages distincts **P1** et **P2,** caractérisée en ce que :
a) l'emballage **P1** est étanche à l'air et comprend :
   - une quantité catalytiquement efficace d'au moins un catalyseur **(M)** qui est un complexe de magnésium comprenant dans sa structure deux ligands carboxylate, identiques ou différents, comprenant de 10 à 32 atomes de carbone, de préférence une quantité comprise entre 0,05 et 10 % en poids et encore plus préférentiellement une quantité comprise entre 0,10 et 5 % en poids par rapport au poids total de la composition obtenue après mélange des parties **P1** et **P2,** et
   - au moins un agent de réticulation **(B),** et
b) l'emballage **P2** ne contient ni ledit catalyseur **(M)** ni ledit agent de réticulation **(B)** et comprend :
   - pour 100 parties en poids d'au moins un composé organosilicié **(A)** comprenant au moins deux groupements hydrolysables et condensables, identiques ou différents, ou au moins deux fonctions silanol =SiOH, et
   - de 0 à 10 partie(s) en poids d'eau.

Une composition bicomposante RTV-2 se présente en deux emballages distincts : **P1** qui contient le catalyseur et est étanche à l'air et **P2.** Elles sont conditionnées après incorporation du catalyseur en deux fractions séparées, l'une des fractions pouvant ne renfermer par exemple que le catalyseur selon l'invention ou un mélange avec l'agent réticulant. La fabrication des compositions bicomposantes RTV-2 conformes à l'invention s'effectue également par mélange des divers constituants dans des appareils appropriés. Des compositions bicomposantes RTV-2 sont décrites en détail par exemple dans les brevets EP 118 325, EP 117 772, EP 10 478, EP 50 358, EP 184 966, US 3 801 572 et US 3 888 815, cités comme référence.

La composition bicomposante RTV-2 permet après mélange des deux parties **P1** et **P2** d'obtenir la composition **(X)** selon l'invention. Il s'agit d'une composition « précurseur » de la composition selon l'invention. Chaque partie de la composition bicomposante RTV-2 peut être fabriquée en mélangeant les différents constituants. Les deux parties peuvent être stockées et commercialisées sous la forme d'un kit. Lors de son utilisation, les deux parties sont mélangées, et ce mélange peut être déposé sur un support souple **S.** La couche déposée peut avoir une épaisseur variable, comprise généralement entre 0,15 mm et plusieurs centimètres, de préférence entre 1 mm et 1 cm. La mise en présence du polyorganosiloxane **A,** de l'eau et du composé **C** qui joue le rôle de catalyseur déclenche les réactions conduisant au durcissement de la composition jusqu'à l'obtention d'un élastomère silicone solide.

D'autres détails ou avantages de l'invention apparaîtront plus clairement au vu des exemples donnés ci-dessous uniquement à titre indicatif.

### EXEMPLES

### Exemple 1 : Préparation ou origine des catalyseurs

### a) Catalyseur (I-1) : Magnésium bis-néodécanoate [Mg(ND)₂]

N° CAS : 57453-97-1 ; ND= anion néodécanoate.
Mg(OEt)₂ + 2 moles d'acide néodécanoïque + toluène → [Mg(ND)₂]+ 2 EtOH
Dans un ballon de 500 ml sont chargés 31.41 g d'éthylate de magnésium (0.274 mol) et 150 ml de toluène. 2 équivalents d'acide néodécanoïque (94.92 g) sont ajoutés. Le mélange hétérogène est agité à une température de 20°C jusqu'à disparition des grains d'éthylate de magnésium. La solution est alors chauffée jusqu'à 125°C pour distiller l'azéotrope toluène-éthanol, soit durant 2h. La solution obtenue après refroidissement est filtrée sur fritté n°3, concentrée à nouveau pour obtenir 200 g de solution à 50% poids de néodécanoate de magnésium, limpide et de jaune pâle à orange (rendement quantitatif).

### b) Catalyseur (I-2) : Magnésium bis-naphthénate [Mg(naphthénate)₂]

Mg(OEt)₂ + 2 moles d'acide naphthénique (en C₁₄-C₁₅) + toluène → [Mg(naphthénate)₂]+ 2 EtOH
Dans un ballon de 100 ml sont chargés 6.96 g d'éthylate de magnésium (60.5 mmol) et 30 ml de toluène. 2 équivalents d'acide naphthénique aliphatique (mélange d'alkylcyclopentane en C₁₄-C₁₅) de masse moléculaire moyenne de 236.8 g/mol (28.65 g) sont ajoutés d'un coup. Le mélange hétérogène est agité à une température de 20°C jusqu'à disparition des derniers grains d'éthylate de magnésium. La solution est alors chauffée jusqu'à 125°C pour distiller l'azéotrope toluène-éthanol, soit durant 2h. La solution obtenue après refroidissement est filtrée sur fritté n°3, concentrée à nouveau pour obtenir 60 g de solution à 50% poids de naphthénate de magnésium de couleur rouge (rendement quantitatif).

### c) Catalyseur (C-1) Magnésium bis-2-éthylhexanoate [Mg(2-éthylhexanoate)₂]

N° CAS : 15602-15-0
Mg(OEt)₂ + 2 acide 2-éthylhexanoïque + toluène → [Mg(2-éthylhexanoate)₂]+ 2 EtOH
Dans un ballon de 100 ml sont chargés 11.114 g d'éthylate de magnésium (96.5 mmol) et 30 ml de toluène. 2 équivalents d'acide 2-éthylhexanoïque (28.13 g) sont ajoutés d'un coup. Le mélange hétérogène est agité à température de 20°C jusqu'à disparition des derniers grains d'éthylate de magnésium. La solution est alors chauffée jusqu'à 125°C pour distiller l'azéotrope toluène-éthanol, soit durant 2h. La solution obtenue après refroidissement est filtrée sur fritté n°3, concentrée à nouveau pour obtenir 60 g de solution à 50% poids de 2-éthylhexanoate de magnésium et est rediluée à 40% (total 75 g) pour donner une huile orange limpide.

### d) Catalyseur (C-2) Calcium bis-néodécanoate [Ca(ND)₂]

N° CAS : 27253-33-4 - ND= anion néodécanoate
Ca(OMe)₂ + 2 acide néodécanoïque + toluène → [Ca(ND)₂]+ 2 MeOH
Dans un ballon de 100 ml sont chargés 4.8 g de méthylate de calcium à 97% (47 mmol) et 25 ml de toluène. 2 équivalents d'acide néodécanoïque (16.28 g) sont ajoutés en 20 min. Le mélange hétérogène est agité à température de20°C jusqu'à disparition des derniers grains de méthylate de calcium. La solution est alors chauffée jusqu'à 100°C pour distiller l'azéotrope toluène-méthanol, soit durant 2h. La solution obtenue après refroidissement est filtrée sur fritté n°3, puis diluée par du toluène pour obtenir une solution à 30% en poids de néodécanoate de calcium (60 g) presque incolore et limpide.

### e) Catalyseur (C-3) Lithium néodécanoate [Li(ND)]

N° CAS : 27253-30-1 ND= anion néodécanoate
LiOH.H₂O + MeOH/EtOH + acide néodécanoïque → LiND

Dans un ballon de 250 ml sont ajoutés 6.09 g de lithine hydratée (145.1 mmol) et 90 ml de méthanol, puis, à la suspension obtenue 25 g d'acide néodécanoïque (145.1 mmol) dilués par 80 ml d'éthanol. Après une heure d'agitation, la solution laiteuse est filtrée puis évaporée à sec pour donner un solide blanc en mousse. Celui-ci est dissout par la même masse d'éthanol (25.8 g) pour donner une solution limpide à 50% poids de néodécanoate de lithium.

### f) Catalyseur (C-4) : bis(éthyl-2-hexanoate) de strontium - [Sr(OCt)₂]

N° CAS : 2457-02-5, Oct = anion bis(éthyl-2-hexanoate) ;
Vendu par la société ABCR GmbH & Co. KG.

### g) Catalyseur (C-5) : Zinc néodécanoate [Zn(ND)₂]

ND= anion néodécanoate ; Vendu par la société Shepherd Chemical Company.

### h) Catalyseur (C-6) : tétra-n-butvl titanate [Ti(O-butyl)₄]

N° CAS : 5593-70-4 ; Tyzor® TnBTvendu par la société Dorf Ketal Specialty Catalyst LLC.

### i) Catalyseur (C-7) : dilaurate de dioctyle étain (DLDOctSn) METATIN® 812 commercialisé par la société ACIMA.

### Exemple 2 : Préparation des compositions silicones liquides et réticulables par des réactions de condensation

Dans un pot en plastique de 185 ml, on ajoute 40 g d'un empattage constitué de :
- 74 % en poids d'une huile polydiméthylsiloxanes α, ω (diméthyl)hydroxysilyl de viscosité dynamique à 25°C de 50000 mPa.s,
- 6,2 % en poids d'une huile polydiméthylsiloxanes α, ω (diméthyl)hydroxysilyl de viscosité dynamique à 25°C de 14000 mPa.s
- 6,4 % en poids d'une silice Aérosil®200 (surface spécifique BET=200m²/g) qui a été traitée en surface par l'hexaméthyldisilazane,
- 3,9 % en poids d'une silice Aérosil®200 (surface spécifique BET=200m²/g), et
- 9,5 % en poids d'une huile polydiméthylsiloxanes de viscosité dynamique à 25°C de 500 mPa.s.

On ajoute ensuite 1,62 g d'un réticulant XL1 vendu par la société Nitrochemie (mélange de méthyltriacétoxysilane et d'éthyltriacétoxysilane). Le mélange est agité au Speed Mixer (DAC 150 FV de la société Hauschild) pendant 25 s et à une vitesse de rotation de 1800 tours/min. On ajoute ensuite une quantité, exprimée en % poids par rapport au poids total de la composition, du catalyseur à tester (pure ou dans un solvant organique), puis on mélange à l'aide d'un « speed mixer » pendant 25 s à 1800 tours/min avant de conditionner le mélange final dans une cartouche étanche.

Pour les mesures de transparence, on procède également à un débullage des compositions de la façon suivante : on place le pot contenant la composition silicone sous une cloche à vide, on enlève le couvercle, puis on applique progressivement une dépression d'environ 0,09 MPa pendant environ 5 min ; puis à pression ambiante. Cette opération est renouvelée une ou deux fois de manière à éliminer toutes les bulles dans les compositions à évaluer après enduction et réticulation sur un support souple.

### Exemple 3 : Enduction sur un support souple de type dentelle.

### • 3.1) Procédé d'enduction.

Une dentelle en polyamide et élasthanne est fixée sur un support en bois permettant de la tendre légèrement, et une plaque métallique est placée sous la dentelle. La composition silicone testée et préparée selon l'Exemple 2 est étalée sur un support (dentelle en polyamide et élasthanne) sous forme de 2 bandes régulières, qui sont mises en forme par passage d'une racle ou d'un tire-film métallique sous forme de 2 bandes de 1 cm de large. Après avoir retiré la plaque métallique, la réticulation est réalisée dans une enceinte climatique (type Weiss), éventuellement après passage au préalable (pendant 15 s) dans un autocuiseur générant de la vapeur d'eau. Après réticulation l'épaisseur du revêtement élastomère silicone solide est comprise entre 0,25 et 0,60 mm (vérifiée à l'aide d'un micromètre ou Palmer). Les résultats de « blocking » des différents catalyseurs testés sont consignés dans les tableaux 1 à 10 ci-dessous.

### • 3.2) Résultats.

### 3.2.1) Mesure du « blocking » :

A la sortie de l'étuve ou de l'enceinte climatique, le tissu enduit est replié sur lui-même de façon à réaliser un collage silicone contre silicone sur une longueur d'au moins 13 cm (la largeur est contrôlée par la largeur de la râcle et l'épaisseur de l'enduction est contrôlée avec un comparateur ou Palmer). Sauf mention contraire cette mesure est réalisée par pelage au dynamomètre sur une dentelle (en polyamide et élasthanne) enduite avec 2 bandes silicones de 1 cm de large et repliée sur elle-même immédiatement en sortie du four, et après application d'un poids de 600 g pendant 24 heures ou 300g pendant 48h. L'épaisseur d'enduction est généralement comprise entre 0,25 et 0,60 mm. La force de blocking est ensuite mesurée par pelage au dynamomètre Zwick, qui donne la valeur de la force de pelage (exprimée dans les tableaux en N pour un front de pelage de 2 cm). La vitesse de pelage est de 100mm/min. On mesure la valeur maximale de la force nécessaire au décollement (Fmax, unité N) et la moyenne des 5 valeurs les plus élevées (appelée « blocking », unité N). Plus les valeurs sont basses moins le phénomène de « blocking » est présent.

**Tableau 1 : Mesures du « blocking » obtenus - catalyseur (I-1) ajouté sous une forme diluée (teneur 40% poids) dans l'acide néodécanoique - enductions réticulées en enceinte climatique pendant 10 min à 80°C et régulée à 20 % d'humidité relative (HR).**

| Compositions | Catalyseur (I-1) [Mg(ND)₂] % poids par rapport au poids total de la composition | Nombre de mmol de catalyseur (I-1) pour 100 g de composition | Epaisseur du revêtement silicone solide après réticulation min - max (mm) | «Blocking » (N) | Fmax (N) |
|---|---|---|---|---|---|
| Inv-1 | 0,36 | 0,98 mmol | 0,39 - 0,53 | 2,0 | 2,2 |
| Inv-2 | 0,29 | 0,79 mmol | 0,23 - 0,47 | 1,6 | 1,8 |
| Inv-3 | 0,26 | 0,71 mmol | 0,30 - 0,63 | 1,3 | 1,4 |
| Inv-4 | 0,24 | 0,65 mmol | 0,42 - 0,63 | 1,0 | 1,3 |

Les résultats quant au « blocking » sont appropriés pour l'application.

**Tableau 2 : Etude du vieillissement accéléré de la composition Inv-2, stockée préalablement en cartouche étanche (RTV-1) à 40°C pendant 30 ou 60 jours. Puis enduction selon parag.3.1) et réticulation 10 min en enceinte climatique régulée à 80°C et 20 % HR.**

| Durée de vieillissement à 40°C cartouche étanche (jours) | Epaisseur du revêtement silicone solide après réticulation min - max (mm) | «Blocking » (N) | Fmax (N) |
|---|---|---|---|
| 0 | 0,32 - 0,43 | 1,6 | 1,8 |
| 30 | 0,30 - 0,50 | 1,7 | 1,8 |
| 60 | 0,41 - 0,54 | 1,9 | 2,4 |

La composition Inv-2 selon l'invention et contenant le catalyseur (I-1) ([Mg(ND)₂]) présente de bonnes propriétés aux vieillissement car on n'observe pas d'élévation du « blocking » pour une composition stockée en cartouche étanche.

Les compositions selon l'invention peuvent être conditionnées sous la forme de RTV-1 (emballage étanche à l'air) et être stockée sans dégrader les propriétés de l'élastomère obtenu après enduction (absence de « blocking »).

**Tableau 3 : Mesures du « blocking » obtenu avec une composition comprenant le catalyseur (I-2) [Mg(naphthénate)₂] ajouté sous une forme diluée (teneur 50% poids) dans le toluène - enductions réticulées en enceinte climatique pendant 10 min à 80°C et régulée à 20 % d'humidité relative (HR).**

| Compositions | Catalyseur (I-2) [Mg(naphthénate)₂] % poids par rapport au poids total de la composition | Nombre de mmol de catalyseur (I-2) pour 100 g de composition | Epaisseur du revêtement silicone solide après réticulation min - max (mm) | «Blocking » (N) | Fmax (N) |
|---|---|---|---|---|---|
| Inv-5 | 0,50 | 1 mmol | 0,41 - 0,56 | 1,36 | 2,88 |

Les résultats quant au « blocking » sont appropriés pour l'application.

**Tableau 4 : Mesures du « blocking » obtenus avec le catalyseur (C-1) Magnésium bis-2-éthylhexanoate [Mg(2-éthylhexanoate)₂] ajouté sous une forme diluée (teneur 40% poids) dans le toluène - Enductions réticulées en enceinte climatique pendant 10 min à 80°C et régulée à 20 % d'humidité relative (HR).**

| Compositions | Catalyseur (C-1) [Mg(2-éthylhexanoate)₂] % poids par rapport au poids total de la composition | Nombre de mmol de catalyseur (C-1) pour 100 g de composition | Epaisseur du revêtement silicone solide après réticulation min - max (mm) | «Blocking » (N) | Fmax (N) |
|---|---|---|---|---|---|
| Comp-1 | 0,40 | 1,25 mmol | 0,30 - 0,47 | 7,4 | 8,3 |
| Comp-2 | 0,35 | 1,12 mmol | 0,26 - 0,42 | 8,1 | 9,4 |
| Comp-3 | 0,30 | 0,97 mmol | 0,36 - 0,67 | 25,3 | 29,1 |
| Comp-4 | 0,26 | 0,83 mmol | 0,29 - 0,39 | 20,5 | 29,1 |

Les valeurs de « blocking » observées pour le catalyseur (C-1) (magnésium bis-2-éthylhexanoate, [Mg(2-éthylhexanoate)₂]) ne sont pas satisfaisantes pour l'application (« blocking » trop élevé).

**Tableau 5 : Mesures du « blocking » obtenus avec le catalyseur (C-2) Calcium bis-néodécanoate [Ca(ND)₂] - Enductions réticulées en enceinte climatique pendant 10 min à 80°C et régulée à 20 % d'humidité relative (HR).**

| Compositions | Catalyseur (C-2) [Ca(ND)2] % poids par rapport au poids total de la composition | Nombre de mmol de catalyseur (C-2) pour 100 g de composition | Epaisseur du revêtement silicone solide après réticulation min - max (mm) | «Blocking » (N) | Fmax (N) |
|---|---|---|---|---|---|
| Comp-5 | 2,50 | 6,60 mmol | 0,31 - 0,40 | 17,3 | 18,6 |
| Comp-6 | 1,75 | 4,57 mmol | 0,35 - 0,54 | 28,5 | 30,0 |
| Comp-7 | 1,44 | 3,77 mmol | 0,25 - 0,36 | 27,0 | 28,3 |

Il a été nécessaire d'ajouter des quantités > 2% en poids de [Ca(ND)₂] par rapport au poids total de la composition pour avoir une réticulation. Les valeurs de « blocking » observées pour le catalyseur (C-2) (calcium bis-néodécanoate [Ca(ND)₂]) ne sont pas satisfaisantes pour l'application (« blocking » trop élevé).

**Tableau 6 : Mesures du « blocking » obtenus avec le catalyseur (C-3) lithium néodécanoate [Li(ND)] - Enductions réticulées en enceinte climatique pendant 10 min à 80°C et régulée à 20 % d'humidité relative (HR).**

| Compositions | Catalyseur (C-3) [Li(ND)] % poids par rapport au poids total de la composition | Nombre de mmol de catalyseur (C-3) pour 100 g de composition | Epaisseur du revêtement silicone solide après réticulation min - max (mm) | «Blocking » (N) | Fmax (N) |
|---|---|---|---|---|---|
| Comp-8 | 1,40 | 3,92 mmol | 0,34 - 0,42 | 23,2 | 26,3 |
| Comp-9 | 0,70 | 1,96 mmol | 0,28 - 0,36 | 10,0 | 11,6 |

Les valeurs de « blocking » observées pour le catalyseur (C-3) lithium néodécanoate [Li(ND)] ne sont pas satisfaisantes pour l'application (« blocking » trop élevé).

**Tableau 7 : Mesures du « blocking » obtenus avec le catalyseur (C-4) : bis(éthyl-2-hexanoate) de strontium - [Sr(Oct)₂]- Enductions réticulées en enceinte climatique pendant 10 min à 80°C et régulée à 20 % d'humidité relative (HR).**

| Compositions | Catalyseur (C-4) [Sr(Oct)₂] % poids par rapport au poids total de la composition | Nombre de mmol de catalyseur (C-4) pour 100 g de composition | Epaisseur du revêtement silicone solide après réticulation min - max (mm) | «Blocking » (N) | Fmax (N) |
|---|---|---|---|---|---|
| Comp-10 | 0,48 | 1.28 mmol | 0,36 - 0,47 | 29,5 | 32,7 |
| Comp-11 | 0,28 | 0.75 mmol | 0,39- 0,46 | 28,7 | 29,7 |

Les valeurs de « blocking » observées pour le catalyseur (C-4) : bis(éthyl-2-hexanoate) de strontium - [Sr(Oct)₂] ne sont pas satisfaisantes pour l'application (« blocking » trop élevé).

**Tableau 8 : Mesures du « blocking » obtenus avec le catalyseur (C-5) : Zinc néodécanoate [Zn(ND)₂] - Enductions réticulées en enceinte climatique pendant 10 min à 80°C et régulée à 20 % d'humidité relative (HR).**

| Compositions | Catalyseur (C-5) [Zn(ND)₂] % poids par rapport au poids total de la composition | Nombre de mmol de catalyseur (C-5) pour 100 g de composition | Epaisseur du revêtement silicone solide après réticulation min - max (mm) | «Blocking » (N) | Fmax (N) |
|---|---|---|---|---|---|
| Comp-12 | 1,25 | 3.06 mmol | 0,44 - 0,57 | 4,1 | 5 |
| Comp-13 | 0,62 | 1.52 mmol | 0,35- 0,49 | 8,5 | 9,3 |

Les valeurs de « blocking » observées pour le catalyseur (C-5) (Zinc néodécanoate [Zn(ND)₂]) ne sont pas satisfaisantes pour l'application (« blocking » trop élevé).

**Tableau 9 : Mesures du « blocking » obtenus avec le catalyseur (C-6) : tétra-n-buty titanate [Ti(O-butyl)₄].**

| Compositions | Catalyseur (C-6) [Ti(O-butyl)₄] % poids par rapport au poids total de la composition | Epaisseur du revêtement silicone solide après réticulation min - max (mm) | «Blocking » (N) | Fmax (N) |
|---|---|---|---|---|
| Comp-14 | 0,019 | 0,35 - 0,53 | 17,3 | 18,6 |
| Comp-15 | 0,029 | 0,32 - 0,43 | 16,5 | 20,16 |
| Comp-16 | 0,015 | 0,34 - 0,43 | 21,6 | 23,0 |
| Comp-17 | 0,010 | 0,40 - 0,49 | 21,5 | 24,05 |

Pour la composition Comp-14 : enduction réticulée en enceinte climatique pendant 10 min à 80°C et régulée à 20 % d'humidité relative (HR). Cependant à ce niveau d'humidité l'enduction devient trop opaque.

Pour les compositions Comp-15, Comp-16 et Comp-17 : enduction réticulée en enceinte climatique pendant 10 min à 80°C et régulée à 10 % d'humidité relative (HR)

Les valeurs de « blocking » observées pour le catalyseur (C-6) : tétra-n-butyl titanate [Ti(O-butyl)₄] ne sont pas satisfaisantes pour l'application (« blocking » trop élevé).

**Tableau 10 : Mesure du « blocking » obtenus avec le catalyseur (C-7) : Dilaurate de dioctyle étain (DLDOE)- Enductions réticulées en enceinte climatique pendant 10 min à 80°C et régulée à 20 % d'humidité relative (HR).**

| Compositions | Catalyseur (C-7) (DLDOE) % poids par rapport au poids total de la composition | Epaisseur du revêtement silicone solide après réticulation min - max (mm) | «Blocking » (N) | Fmax (N) |
|---|---|---|---|---|
| Comp-18 | 0,063 | 0,42-0,47 | 2,1 | 2,7 |

### 3.2.2) Mesure de transparence :

La composition silicone à tester est enduite, selon le mode opératoire décrit à l'Exemple 3 paragraphe 3.1, sur un film transparent en Terphane® (support souple en téréphtalate de polyéthylèneglycol) et réticulée dans les conditions d'épaisseur, de durée, température et d'humidité relative contrôlées (réticulation 10 min en enceinte humide, température= 80°C et 20% d'humidité relative). Puis le niveau de transmission optique est caractérisé à l'aide d'un spectrophotomètre UV/visible (Evolution 201 de la Société ThermoScientific), à la longueur d'onde de 500 nm. Sauf mention contraire l'épaisseur de l'enduction silicone pour les mesures de transparence est ajustée à 0,3 mm. A noter qu'à cette longueur d'onde le film Terphane seul (sans revêtement silicone solide) présente une transparence de 76 %. Les résultats sont consignés dans le Tableau 11 ci-dessous.

**Tableau 11 : Mesure de transparence - Sur film en Terphane®, enductions réticulées en enceinte climatique pendant 10 min à 80°C et régulée à 20 % d'humidité relative (HR).**

| Compositions | Catalyseur testé | Concentration (%) | Transparence (%) |
|---|---|---|---|
| Inv-6 | (I-1) [Mg(ND)₂] | 0,42 | 68 |
| Comp-19 | (C-5) [Zn(ND)₂] | 1,20 | 54 |
| Comp-20 | (C-6) [Ti(O-butyl)₄] | 0,02 | 49 |
| Comp-21 | (C-7) DLDOE | 0,06 | 70 |

Lorsque le catalyseur (I-1) qui est le néodécanoate de magnésium [Mg(ND)₂] est mis en oeuvre selon l'invention, on obtient des films dont la transparence est très proche de celle obtenu avec un catalyseur à l'étain (composition Comp-21).

### Exemple 4 : Mesure des propriétés physiques après réticulation à température ambiante (23°C)

### 4.1) Préparation des compositions

On introduit dans un malaxeur :
- 100 g d'une huile polydiméthylsiloxane α, ω dihydroxylée de viscosité 50 000 mPa.s,
- dispersion de 6,2 g (soit 5,6 %) d'une silice de pyrogénation de type Aérosil® 300, traitée en surface à l'octaméthyltétrasiloxane (D4) (surface spécifique par le procédé BET de 300 m²/g), et
- 4,5 g (soit 4,1 %) de réticulant XL1, vendu par la société Nitrochemie et constituée d'un mélange de méthyltriacétoxysilane et d'éthyltriacétoxysilane.

Ensuite on mélange intimement par malaxage pendant environ 1 minute au Speedmixer (de la Sté Hauschild). Puis on ajoute la quantité de catalyseur à tester (exprimée en % poids par rapport au poids totlae de la composition), dispersion à la spatule et agitation pendant environ 1 minute au Speedmixer. Cette opération est suivie par un débullage de la composition par mise sous vide pendant environ 5 minutes, puis celle-ci conditionnement dans une cartouche étanche à l'air (monocomposant RTV-1).

### 4.2) Réticulation à température ambiante (23°C).

Des films de 2 mm d'épaisseur sont étendus à la racle permettant de contrôler l'épaisseur, et on laisse réticuler la composition silicone dans une salle conditionnée à 23°C et à 50% d'humidité relative.

On mesure :
a) le temps de formation de peau (TFP) : temps au bout duquel on observe une réticulation de surface, et
b) la dureté (en shore A) : elle traduit la formation du réseau tridimensionnel.

**Tableau 12 - Propriétés Elastomère silicones solides**

| Catalyseur | Dose catalyseur (%) | TFP (minutes) | Dureté après 24H de réticulation (Shore A) |
|---|---|---|---|
| (I-1) [Mg(ND)₂] | 0,84 | 10,5 | 17 |
| (C-4) [Sr(Oct)₂] | 0,86 | 13 | 15,6 |
| (C-7) DLDOE | 0,06 | 6,5 | 20,7 |

On constate que le néodécanoate de Magnésium (I-1) est plus réactif (+30%) que le carboxylate de strontium en C₈ (C-4) et permet d'obtenir des propriétés améliorées de dureté à 24 heures.

## Revendications

1. Procédé d'enduction d'une composition silicone **(X)** liquide et réticulable par des réactions de condensation pour former un élastomère silicone solide sur un support souple **(S)** comprenant les étapes a), b) et c) suivantes :
a) on prépare une composition silicone **(X)** liquide et réticulable par des réactions de condensation comprenant :
- au moins un composé organosilicié **(A)** comprenant au moins deux groupements hydrolysables et condensables, identiques ou différents, ou au moins deux fonctions silanol ≡SiOH,
- au moins un agent de réticulation **(B),**
- éventuellement au moins une charge **(C),** et
- une quantité catalytiquement efficace d'au moins un catalyseur **(M)** qui est un complexe de magnésium comprenant dans sa structure deux ligands carboxylate, identiques ou différents, comprenant de 10 à 32 atomes de carbone,
b) sur un support souple **(S),** qui peut éventuellement être préalablement recouvert sur une ou deux faces d'une ou plusieurs couche(s) d'un matériau polymère, on dépose de manière continue ou discontinue ladite composition silicone **(X)** sur une face dudit support souple **(S)** ou éventuellement sur les deux faces dudit support souple **(S),** et
c) on laisse réticuler ladite composition silicone **(X)** en présence d'humidité apportée par l'air ambiant ou par une exposition à de la vapeur d'eau, ou par addition préalable d'eau dans ladite composition silicone **(X)** de manière à former un élastomère silicone solide réticulé.

2. Procédé selon la revendication 1 dans lequel à l'étape b) on dépose une quantité suffisante de ladite composition silicone **(X)** de manière à former soit un cordon soit une couche continue sur ledit support souple **(S).**

3. Procédé selon la revendication 1 dans lequel à l'étape c) on laisse réticuler ladite composition silicone **(X)** en présence d'humidité apportée par l'air ambiant ou par une exposition à de la vapeur d'eau, ou par addition préalable d'eau dans ladite composition silicone **(X)** à une température comprise entre 20 et 90°C, de préférence entre 40 et 90°C, et encore plus préférentiellement entre 50 et 90°C.

4. Procédé selon la revendication 1 **caractérisé en ce que** le catalyseur **(M)** est un complexe de formule **(1)** suivante :
[Mg (C¹)ₓ (C²)_{y}] **(1)**
dans laquelle :
- les symboles C¹ et C² sont des ligands, identiques ou différents, choisis dans le groupe des carboxylates comprenant de 10 à 32 atomes de carbone, de préférence de 10 à 20 atomes de carbone et encore plus préférentiellement de 10 à 15 atomes de carbone,
- les symboles x et y représentent le nombre de ligands carboxylates et sont des nombres entiers égaux à 0, 1 ou 2 avec la condition que la somme x+ y = 2.

5. Procédé selon l'une quelconque des revendications précédentes **caractérisé en ce que** le catalyseur **(M)** est un complexe de formule **(2)** suivante :
[Mg (C¹)₂] **(2)**
dans laquelle :
- le symbole C¹ est un ligand choisi dans le groupe des carboxylates comprenant de 10 à 32 atomes de carbone, de préférence de 10 à 20 atomes de carbone et encore plus préférentiellement de 10 à 15 atomes de carbone,

6. Procédé selon l'une quelconque des revendications précédentes caractérisé en ce les ligands carboxylates sont choisis parmi le groupe constitué par :
- les anions: décanoate [CH₃-(CH₂)₈-COO]⁻, undécanoate [CH₃-(CH₂)₉-COO]⁻, dodécanoate ou laurate [CH₃-(CH₂)₁₀-COO]⁻, tridécanoate [CH₃-(CH₂)₁₁-COO]⁻, tétradécanoate ou myristate [CH₃-(CH₂)₁₂-COO]⁻, pentadécanoate [CH₃-(CH₂)₁₃-COO]⁻, hexadécanoate ou palmitate [CH₃-(CH₂)₁₄-COO]⁻, heptadécanoate [CH₃-(CH₂)₁₅-COO]⁻, octadécanoate ou stéarate [CH₃-(CH₂)₁₆-COO]⁻ , nonadécanoate [CH₃-(CH₂)₁₇-COO]⁻ , éicosanoate [CH₃-(CH₂)₁₈-COO]⁻, hénéicosanoate [CH₃-(CH₂)₁₉-COO]⁻, docosanoate ou béhénate [CH₃-(CH₂)₂₀-COO]⁻, tricosanoate [CH₃-(CH₂)₂₁-COO]⁻, tétracosanoate ou lignocérate [CH₃-(CH₂)₂₂-COO]⁻, pentacosanoate [CH3-(CH₂)₂₃-COO]⁻, hexacosanoate [CH₃-(CH₂)₂₄-COO]⁻, acide heptacosanoate [CH₃-(CH₂)₂₅-COO]⁻, octacosanoate [CH₃-(CH₂)₂₆-COO]⁻, nonacosanoate [CH₃-(CH₂)₂₇-COO]⁻, triacontanoate [CH₃-(CH₂)₂₈-COO]⁻, hentriacontanoate [CH₃-(CH₂)₂₉-COO]⁻ , dotriacontanoate [CH₃-(CH₂)₃₀-COO]⁻, palmitoléate [CH₃-(CH₂)₅-CH=CH-(CH₂)₇-COO]⁻, oléate [CH₃(CH₂)₇CH=CH(CH₂)₇COO]⁻, linoléate [CH₃-(CH₂)₄-(CH=CHCH₂)₂-(CH₂)₆-COO]⁻, linolénate [CH₃-CH₂-(CH=CHCH₂)₃-(CH₂)₆-COO]⁻, arachidonate [CH₃-(CH₂)₄-(CH=CHCH₂)₄-(CH₂)₂-COO]⁻,
- les anions: 7,7-diméthyloctanoate [(CH₃)₃C-(CH₂)₅-COO]⁻, 2,2-diméthyloctanoate [CH₃-(CH₂)₅-C(CH₃)₂-COO]⁻, 2,2,3,5-tétraméthylhexanoate [(CH₃)₂CH-CH₂-CH(CH₃)-C(CH₃)₂-COO]⁻, 2,5-diméthyl-2-éthylhexanoate [(CH₃)₂CH-(CH₂)₂-C(CH₃)(C2H₅)-COO]⁻, 2,2-diéthylhexanoate [CH₃-(CH₂)₃-C(C₂H₅)₂-COO]⁻, 2,4-diméthyl-2-isopropylpentanoate [(CH₃)₂CH-CH₂-C(CH₃)(i-propyl)-COO]⁻, et
- les anions naphthénates en C₁₀ à C₂₀ et de préférence en C₁₀ à C₁₅.

7. Procédé selon l'une quelconque des revendications 1, 4 ou 5 caractérisé en ce les ligands carboxylates sont choisis parmi le groupe constitué par les carboxylates de formule brute [C₁₀H₁₉O₂]⁻ et les naphthénates en C₁₀ à C₂₀ et de préférence en C₁₀ à C₁₅.

8. Procédé selon la revendication 1 **caractérisé en ce que** le catalyseur **(M)** est le complexe [Mg(néodécanoate)₂] ou le complexe [Mg(naphthénate)₂] avec l'anion naphthénate ayant une structure chimique en C₁₀ à C₂₀ et de préférence en C₁₀ à C₁₅.

9. Procédé selon la revendication 1 dans laquelle le composé organosilicié **A** est un polyorganosiloxane comprenant :
(i) au moins deux motifs siloxyles de formule **(3)** suivante : 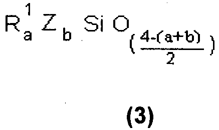 dans laquelle :
- les symboles R¹, identiques ou différents, représentent des radicaux hydrocarbonés monovalents en C₁ à C₃₀,
- les symboles Z, identiques ou différents, représentent chacun un groupement hydrolysable et condensable ou un groupement hydroxy et de préférence sont choisis parmi le groupe constitué par les groupements de type: hydroxy, alcoxy, alcoxy-alkylène-oxy, amino, amido, acylamino, aminoxy, iminoxy, cétiminoxy, acyloxy, iminoxi, cétiminoxy et énoxy,
- a est égal à 0, 1 ou 2, b est égal à 1, 2 ou 3, la somme a + b est égale à 1, 2 ou 3, et éventuellement
(ii) un ou plusieurs motif(s) siloxyle(s) de formule **(4)** suivante : 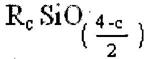 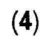 dans laquelle :
- les symboles R, identiques ou différents, représentent des radicaux hydrocarbonés monovalent en C₁ à C₃₀ éventuellement substitués par un ou plusieurs atomes d'halogène ou par des groupements : amino, éther, ester, époxy, mercapto ou cyano, et
- le symbole c est égal à 0, 1, 2 ou 3.

10. Procédé selon la revendication 1 dans laquelle l'agent de réticulation **B** est de préférence un composé de silicium dont chaque molécule comprend au moins trois groupements hydrolysables et condensables **Y** et ledit agent de réticulation **B** ayant la formule **(5)** suivante :
R'₍₄₋ₐ₎SiYₐ **(5)**
formule dans laquelle :
- le symbole R' est un radical hydrocarboné monovalent comprenant de 1 à 30 atomes de carbone,
- le symbole Y est un groupement alcoxy, alcoxy-alkylène-oxy, amino, amido, acylamino, aminoxy, iminoxy, cétiminoxy, acyloxy et énoxy et de préférence Y est un groupement alcoxy, acyloxy, énoxy, cétiminoxy ou oxime, et
- le symbole a = 3 ou 4.

11. Procédé selon la revendication 1 **caractérisé en ce que** la composition silicone **(X)** liquide et réticulable ne contient pas de catalyseur ayant dans sa structure au moins un atome d'étain.

12. Procédé selon la revendication 1 **caractérisé en ce que** à l'étape b) on dépose ladite composition silicone **(X)** sur un support souple **(S)** qui est un textile par transfert, par rouleau lécheur ou par pulvérisation à l'aide d'une buse, d'une racle, d'un cadre rotatif ou d'un rouleau inverse « reverse roll ».

13. Procédé selon la revendication 1 **caractérisé en ce que** le support souple **(S)** est un textile et de préférence une dentelle ou une bande élastique.

14. Support souple **(S)** enduit sur une ou deux faces de manière continue ou discontinue d'un élastomère silicone solide susceptible d'être obtenu par le procédé tel que défini selon l'une quelconque des revendications 1 à 13.

15. Matériau composite comprenant :
- un support souple **(S)** qui peut éventuellement être recouvert sur une ou deux faces d'une ou plusieurs couche(s) d'un matériau polymère, et
- un revêtement sur le dit support souple ou sur ledit matériau polymère constitué d'un élastomère silicone solide obtenu selon le procédé tel que défini selon l'une quelconque des revendications 1 à 13.

16. Utilisation de la composition silicone **(X)** liquide et réticulable par des réactions de condensation telle que définie selon l'une quelconque des revendications 1 à 11 pour enduire un support souple **(S).**

17. Utilisation du catalyseur **(M)** tel que défini selon la revendication 1 ou selon l'une quelconque des revendications 4 à 8 pour obtenir des élastomères silicones solides transparents ou translucides.

18. Composition silicone **(X)** liquide et réticulable par des réactions de condensation telle que définie selon la revendication 1 ou selon l'une quelconque des revendications 4 à 11.

19. Elastomère silicone solide obtenu par réticulation en présence d'humidité apporté par l'air ambiant de la composition **(X)** telle que décrite selon la revendication 18.

20. Composition monocomposante RTV-1 se présentant en un seul emballage **P** étanche à l'air et comprenant la composition **(X)** telle que définie selon la revendication 1.

21. Composition bicomposante RTV-2, précurseur de la composition **(X)** telle que définie selon la revendication 1, se présentant en deux emballages distincts **P1** et **P2, caractérisée en ce que** :
a) l'emballage **P1** est étanche à l'air et comprend :
- une quantité catalytiquement efficace d'au moins un catalyseur **(M)** qui est un complexe de magnésium comprenant dans sa structure deux ligands carboxylate, identiques ou différents, comprenant de 10 à 32 atomes de carbone, et
- au moins un agent de réticulation **(B),** et
b) l'emballage **P2** ne contient ni ledit catalyseur **(M)** ni ledit agent de réticulation **(B)** et comprend :
- pour 100 parties en poids d'au moins un composé organosilicié **(A)** comprenant au moins deux groupements hydrolysables et condensables, identiques ou différents, ou au moins deux fonctions silanol =SiOH, et
- de 0 à 10 partie(s) en poids d'eau.

## Patentansprüche

1. Verfahren zur Beschichtung mit einer Silikonzusammensetzung **(X),** die flüssig ist und mittels Kondensationsreaktionen vernetzt werden kann, um auf einem nachgiebigen Träger **(S)** ein feststoffliches Silikonelastomer zu bilden, wobei es die folgenden Schritte a), b) und c) umfasst:
a) Herstellen einer Silikonzusammensetzung **(X),** die flüssig und ist und miitels Kondensationsreaktionen vernetzt werden kann, wobei sie Folgendes umfasst:
- mindestens eine Organosiliciumverbindung **(A),** die mindestens zwei hydrolysierbare und kondensierbare Gruppen, welche identisch oder verschiedenartig sind, oder mindestens zwei funktionelle Silanolgruppen =SiOH umfasst,
- mindestens ein Vernetzungsmittel **(B),**
- möglicherweise mindestens einen Füllstoff **(C),** und
- eine katalytisch wirksame Menge mindestens eines Katalysators **(M),** bei welchem es sich um einen Magnesiumkomplex handelt, der in seiner Struktur zwei Carboxylatliganden umfasst, welche identisch oder verschiedenartig sind und 10 bis 32 Kohlenstoffatome umfassen,
b) kontinuierliches oder chargenweises Aufbringen der Silikonzusammensetzung **(X)** auf eine Seite eines nachgiebigen Trägers **(S)** oder möglicherweise auf die beiden Seiten des nachgiebigen Trägers **(S),** wobei der nachgiebige Träger **(S)** möglicherweise zuvor ein- oder beidseitig mit einer oder mehreren Schichten eines Polymerwerkstoffs überzogen werden kann, und
c) Vernetzenlassen der Silikonzusammensetzung **(X)** in Gegenwart von Feuchtigkeit, die aus der Umgebungsluft stammt oder aus dem Einwirken von Wasserdampf, oder aus dem vorherigen Zusatz von Wasser zur Silikonzusammensetzung **(X),** um auf diese Weise ein vernetztes feststoffliches Silikonelastomer zu bilden.

2. Verfahren nach Anspruch 1, wobei in Schritt b) eine Menge der Silikonzusammensetzung **(X)** aufgebracht wird, die dafür ausreicht, entweder einen Strang oder eine durchgehende Schicht auf den nachgiebigen Träger **(S)** aufzubringen.

3. Verfahren nach Anspruch 1, in welchem die Silikonzusammensetzung **(X)** in Schritt c) bei einer Temperatur im Bereich von 20 bis 90 °C, vorzugsweise von 40 bis 90 °C, mit noch größerem Vorzug von 50 bis 90 °C, in Gegenwart von Feuchtigkeit vernetzen gelassen wird, die aus der Umgebungsluft stammt oder aus dem Einwirken von Wasserdampf, oder aus dem vorherigen Zusatz von Wasser zur Silikonzusammensetzung **(X).**

4. Verfahren nach Anspruch 1, **dadurch gekennzeichnet, dass** es sich bei dem Katalysator **(M)** um einen Komplex der folgenden Formel **(1)** handelt:
[Mg (C¹)ₓ (C²)_{y}] **(1)**
wobei:
- die Formelzeichen C¹ und C² für Liganden stehen, die identisch oder verschiedenartig sind, wobei sie aus der Gruppe der Carboxylate ausgewählt sind, welche 10 bis 32 Kohlenstoffatome, vorzugsweise 10 bis 20 Kohlenstoffatome und, mit noch größerem Vorzug, 10 bis 15 Kohlenstoffatome umfassen,
- die Formelzeichen x und y für die Anzahl an Carboxylatliganden stehen, wobei es sich um ganze Zahlen handelt, die gleich 0, 1 oder 2 sind, mit der Maßgabe, dass die Summe von x + y = 2 ist.

5. Verfahren nach einem beliebigen der vorhergehenden Ansprüche, **dadurch gekennzeichnet, dass** es sich bei dem Katalysator **(M)** um einen Komplex der folgenden Formel **(2)** handelt:
[Mg (C¹)₂] **(2)**
wobei:
- das Formelzeichen C¹ für einen Liganden steht, der aus der Gruppe der Carboxylate ausgewählt ist, welche 10 bis 32 Kohlenstoffatome, vorzugsweise 10 bis 20 Kohlenstoffatome und, mit noch größerem Vorzug, 10 bis 15 Kohlenstoffatome umfassen.

6. Verfahren nach einem beliebigen der vorhergehenden Ansprüche, **dadurch gekennzeichnet, dass** die Carboxylatliganden aus der Gruppe ausgewählt sind, die aus den folgenden besteht:
- den Anionen: Decanoat [CH₃-(CH₂)₈-COO]⁻, Undecanoat [CH₃-(CH₂)₉-COO]⁻, Dodecanoat oder Laurat [CH₃-(CH₂)₁₀-COO]⁻, Tridecanoat [CH₃-(CH₂)₁₁-COO]⁻, Tetradecanoat oder Myristat [CH₃-(CH₂)₁₂-COO]⁻, Pentadecanoat [CH₃-(CH₂)₁₃-COO]⁻, Hexadecanoat oder Palmitat [CH₃-(CH₂)₁₄-COO]⁻, Heptadecanoat [CH₃-(CH₂)₁₅-COO]⁻, Octadecanoat oder Stearat [CH₃-(CH₂)₁₆-COO]⁻, Nonadecanoat [CH₃-(CH₂)₁₇-COO]⁻, Eicosanoat [CH₃-(CH₂)₁₈-COO]⁻, Heneicosanoat [CH₃-(CH₂)₁₉-COO]⁻, Docosanoat oder Behenat [CH₃-(CH₂)₂₀-COO]⁻, Tricosanoat [CH₃-(CH₂)₂₁-COO]⁻, Tetracosanoat oder Lignocerat [CH₃-(CH₂)₂₂-COO]⁻, Pentacosanoat [CH₃-(CH₂)₂₃-COO]⁻, Hexacosanoat [CH₃-(CH₂)₂₄-COO]⁻, Heptacosanoat-Säure [CH₃-(CH₂)₂₅-COO]⁻, Octacosanoat [CH₃-(CH₂)₂₆-COO]⁻, Nonacosanoat [CH₃-(CH₂)₂₇-COO]⁻, Triacontanoat [CH₃-(CH₂)₂₈-COO]⁻, Hentriacontanoat [CH₃-(CH₂)₂₉-COO]⁻, Dotriacontanoat [CH₃-(CH₂)₃₀-COO]⁻, Palmitoleat [CH₃-(CH₂)₅-CH=CH-(CH₂)₇-COO]⁻, Oleat [CH₃(CH₂)₇CH=CH(CH₂)₇COO]⁻, Linoleat [CH₃-(CH₂)₄-(CH=CHCH₂)₂-(CH₂)₆-COO]⁻, Linolenat [CH₃-CH₂-(CH=CHCH₂)₃-(CH₂)₆-COO]⁻, Arachidonat [CH₃-(CH₂)₄-(CH=CHCH₂)₄-(CH₂)₂-COO]⁻,
- den Anionen: 7,7-Dimethyloctanoat [(CH₃)₃C-(CH₂)₅-COO]⁻, 2,2-Dimethyloctanoat [CH₃-(CH₂)₅-C(CH₃)₂-COO]⁻, 2,2,3,5-Tetramethylhexanoat [(CH₃)₂CH-CH₂-CH(CH₃)-C(CH₃)₂-COO]⁻, 2,5-Dimethyl-2-ethylhexanoat [(CH₃)₂CH-(CH₂)₂-C(CH₃)(C₂H₅)-COO]⁻, 2,2-Diethylhexanoat [CH₃-(CH₂)₃-C(C₂H₅)₂-COO]⁻, 2,4-Dimethyl-2-isopropylpentanoat [(CH₃)₂CH-CH₂-C(CH₃)(i-propyl)-COO]⁻, und
- den Naphthenat-Anionen von C₁₀ bis C₂₀ und vorzugsweise von C₁₀ bis C₁₅.

7. Verfahren nach einem beliebigen der Ansprüche 1, 4 oder 5, **dadurch gekennzeichnet, dass** die Carboxylatliganden aus der Gruppe ausgewählt sind, die aus den Carboxylaten mit der Summenformel [C₁₀H₁₉O₂]- und den Naphthenaten von C₁₀ bis C₂₀ und vorzugsweise von C₁₀ bis C₁₅ besteht.

8. Verfahren nach Anspruch 1, **dadurch gekennzeichnet, dass** es sich bei dem Katalysator **(M)** um den Komplex [Mg(Neodecanoat)₂] oder den Komplex [Mg(Naphthenat)₂] handelt, wobei das Naphthenat eine chemische Struktur von C₁₀ bis C₂₀ und vorzugsweise von C₁₀ bis C₁₅ hat.

9. Verfahren nach Anspruch 1, wobei es sich bei der Organosiliciumverbindung **A** um ein Polyorganosiloxan handelt, das Folgendes umfasst:
(i) mindestens zwei Siloxylbausteine der folgenden Formel **(3):** 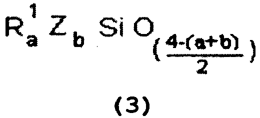 wobei:
- die Formelzeichen R¹, welche identisch oder verschiedenartig sind, für einbindige C₁- bis C₃₀-Kohlenwasserstoffreste stehen,
- die Formelzeichen Z, welche identisch oder verschiedenartig sind, jeweils für eine hydrolysierbare und kondensierbare Gruppe oder eine Hydroxylgruppe stehen, wobei sie vorzugsweise aus der Gesamtheit ausgewählt sind, welche aus den Gruppen der folgenden Typen besteht: Hydroxy, Alkoxy, Alkoxy-Alkylenoxy, Amino, Amido, Acylamino, Aminoxy, Iminoxy, Cetiminoxy, Acyloxy, Iminoxi, Cetiminoxy und Enoxy,
- a gleich 0, 1 oder 2 ist, b gleich 1, 2 oder 3 ist, wobei die Summe a + b gleich 1, 2 oder 3 ist, und
(ii) einen oder mehrere Siloxylbaustein(e) der folgenden Formel **(4):** 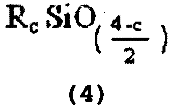 wobei:
- die Formelzeichen R, welche identisch oder verschiedenartig sind, für einbindige C₁- bis C₃₀-Kohlenwasserstoffreste stehen, die möglicherweise mit einem oder mehreren Halogenatomen oder mit den folgenden Gruppen subsituiert sind: Amino, Ether, Ester, Epoxid, Mercapto oder Cyano, und
- das Formelzeichen c gleich 0, 1, 2 oder 3 ist.

10. Verfahren nach Anspruch 1, wobei es sich bei dem Vernetzungsmittel **B** vorzugsweise um eine Siliciumverbindung handelt, deren Moleküle jeweils mindestens drei hydrolysierbare und kondensierbare Gruppen **Y** umfassen, und wobei das Vernetzungsmittel **B** die folgende Formel **(5)** hat:
R'₍₄₋ₐ₎SiYₐ **(5)**
wobei in dieser Formel:
- das Formelzeichen R' für einen einbindigen Kohlenwasserstoffrest steht, der 1 bis 30 Kohlenstoffatome umfasst,
- das Formelzeichen Y für eine der Gruppen Alkoxy, Alkoxy-Alkylenoxy, Amino, Amido, Acylamino, Aminoxy, Iminoxy, Cetiminoxy, Acyloxy und Enoxy steht, wobei Y vorzugsweise für eine der Gruppen Alkoxy, Acyloxy, Enoxy, Cetiminoxy oder Oxim steht, und
- das Formelzeichen a = 3 oder 4 ist.

11. Verfahren nach Anspruch 1, **dadurch gekennzeichnet, dass** die flüssige und vernetzbare Silikonzusammensetzung **(X)** keinerlei Katalysator enthält, welcher in seiner Struktur mindestens ein Zinnatom aufweist.

12. Verfahren nach Anspruch 1, **dadurch gekennzeichnet, dass** die Silikonzusammensetzung **(X)** in Schritt b) durch Übertragen, durch eine Streifwalze oder durch Besprühen mittels einer Düse, einer Rakel, einer Rotationsdruckform oder einer Gegenwalze "Reverse roll" auf einen nachgiebigen Träger **(S)** aufgebracht werden, bei welchem es sich um einen Textilstoff handelt.

13. Verfahren nach Anspruch 1, **dadurch gekennzeichnet, dass** es sich bei dem nachgiebigen Träger **(S)** um einen Textilstoff und vorzugsweise um eine Spitze oder ein elastisches Band handelt.

14. Nachgiebiger Träger **(S),** der ein- oder beidseitig auf kontinuierliche Weise oder chargenweise mit einem feststofflichen Silikonelastomer beschichtet wurde, welches mittels des Verfahrens nach der Begriffsbestimmung in einem beliebigen der Ansprüche 1 bis 13 erhalten werden kann.

15. Verbundmaterial, das Folgendes umfasst:
- einen nachgiebigen Träger **(S),** der möglicherweise ein- oder beidseitig mit einer oder mehreren Schichten eines Polymerwerkstoffs überzogen sein kann, und
- eine Beschichtung, die sich auf dem nachgiebigen Träger oder auf dem Polymerwerkstoff befindet und aus einem feststofflichen Silikonelastomer besteht, welches gemäß dem Verfahren nach der Begriffsbestimmung in einem beliebigen der Ansprüche 1 bis 13 erhalten werden kann.

16. Verwendung der Silikonzusammensetzung **(X),** die flüssig ist und durch Kondensationsreaktionen vernetzt werden kann, wobei sie der Begriffsbestimmung nach einem beliebigen der Ansprüche 1 bis 11 entspricht, zum Beschichten eines nachgiebigen Trägers **(S).**

17. Verwendung des Katalysators **(M)** gemäß der Begriffsbestimmung in Anspruch 1 oder in einem beliebigen der Ansprüche 4 bis 8, um durchsichtige oder durchscheinende feststoffliche Silikonelastomere zu erhalten.

18. Silikonzusammensetzung **(X),** die flüssig ist und durch Kondensationsreaktionen vernetzt werden kann, wobei sie der Begriffsbestimmung nach Anspruch 1 oder nach einem beliebigen der Ansprüche 4 bis 11 entspricht.

19. Feststoffliches Silikonelastomer, das durch Vernetzung der Zusammensetzung **(X),** welche der Beschreibung nach Anspruch 18 entspricht, in Gegenwart von Feuchtigkeit erhalten wurde, die aus der Umgebungsluft stammt.

20. Einkomponentenzusammensetzung RTV-1, die in Form einer einzigen Packung **P** vorliegt, welche luftdicht ist und die Zusammensetzung **(X)** gemäß der Begriffsbestimmung in Anspruch 1 umfasst.

21. Zweikomponentenzusammensetzung RTV-2, die eine Vorstufe der Zusammensetzung **(X)** gemäß der Begriffsbestimmung in Anspruch 1 darstellt, wobei sie in Form zweier getrennter Packungen **P1** und **P2** vorliegt und **dadurch gekennzeichnet ist, dass**
a) die Packung **P1** luftdicht ist und Folgendes umfasst:
- eine katalytisch wirksame Menge mindestens eines Katalysators **(M),** bei welchem es sich um einen Magnesiumkomplex handelt, der in seiner Struktur zwei Carboxylatliganden umfasst, die identisch oder verschiedenartig sind und 10 bis 32 Kohlenstoffatome umfassen, und
- mindestens ein Vernetzungsmittel **(B),** und
b) die Packung **P2** weder den Katalysator **(M)** noch das Vernetzungsmittel **(B)** enthält, wobei sie Folgendes umfasst:
- mindestens eine Organosiliciumverbindung **(A),** die mindestens zwei hydrolysierbare und kondensierbare Gruppen, welche identisch oder verschiedenartig sind, oder mindestens zwei funktionelle Silanolgruppen ≡SiOH umfasst, wobei sie 100 Gewichtsteile ausmacht, und
- 0 bis 10 Gewichtsteile an Wasser.

## Claims

1. Process for coating a liquid silicone composition **(X)** that is crosslinkable via condensation reactions to form a solid silicone elastomer on a flexible support **(S),** comprising steps a), b) and c) below:
a) a liquid silicone composition **(X)** that is crosslinkable via condensation reactions is prepared, comprising:
- at least one organosilicon compound **(A)** comprising at least two identical or different hydrolyzable and condensable groups, or at least two silanol functions =SiOH,
- at least one crosslinking agent **(B),**
- optionally at least one filler **(C),** and
- a catalytically effective amount of at least one catalyst **(M)** which is a magnesium complex comprising in its structure two identical or different carboxylate ligands, comprising from 10 to 32 carbon atoms,
b) on a flexible support **(S),** which may optionally be pre-covered on one or two faces with one or more layers of a polymer material, said silicone composition **(X)** is deposited continuously or discontinuously onto one face of said flexible support **(S)** or optionally onto the two faces of said flexible support **(S),** and
c) said silicone composition **(X)** is left to crosslink in the presence of humidity provided by the ambient air or by exposure to water vapor, or by prior addition of water to said silicone composition **(X)** so as to form a crosslinked solid silicone elastomer.

2. Process according to Claim 1, in which, in step b), a sufficient amount of said silicone composition **(X)** is deposited so as to form either a bead or a continuous layer on said flexible support **(S).**

3. Process according to Claim 1, in which, in step c), said silicone composition **(X)** is left to crosslink in the presence of humidity provided by the ambient air or by exposure to water vapor, or by prior addition of water to said silicone composition **(X)** at a temperature of between 20 and 90°C, preferably between 40 and 90°C, and even more preferentially between 50 and 90°C.

4. Process according to Claim 1, **characterized in that** the catalyst **(M)** is a complex of formula **(1)** below:
[Mg (C¹)ₓ (C²)_{y}] **(1)**
in which:
- the symbols C¹ and C² are identical or different ligands chosen from the group of carboxylates comprising from 10 to 32 carbon atoms, preferably from 10 to 20 carbon atoms and even more preferentially from 10 to 15 carbon atoms,
- the symbols x and y represent the number of carboxylate ligands and are integers equal to 0, 1 or 2 with the condition that the sum x+ y = 2.

5. Process according to any one of the preceding claims, **characterized in that** the catalyst **(M)** is a complex of formula **(2)** below:
[Mg (C¹)₂] **(2)**
in which:
- the symbol C¹ is a ligand chosen from the group of carboxylates comprising from 10 to 32 carbon atoms, preferably from 10 to 20 carbon atoms and even more preferentially from 10 to 15 carbon atoms.

6. Process according to any one of the preceding claims, **characterized in that** the carboxylate ligands are chosen from the group formed by:
- the anions: decanoate [CH₃-(CH₂)₈-COO]⁻, undecanoate [CH₃-(CH₂)₉-COO]⁻, dodecanoate or laurate [CH₃-(CH₂)₁₀-COO]⁻, tridecanoate [CH₃-(CH₂)₁₁-COO]⁻ tetradecanoate or myristate [CH₃-(CH₂)₁₂-COO]⁻, pentadecanoate [CH₃-(CH₂)₁₃-COO]⁻, hexadecanoate or palmitate [CH₃-(CH₂)₁₄-COO]⁻, heptadecanoate [CH₃-(CH₂)₁₅-COO]⁻, octadecanoate or stearate [CH₃-(CH₂)₁₆-COO]⁻, nonadecanoate [CH₃-(CH₂)₁₇-COO]⁻, eicosanoate [CH₃-(CH₂)₁₈-COO]⁻, heneicosanoate [CH₃-(CH₂)₁₉-COO]⁻, docosanoate or behenate [CH₃-(CH₂)₂₀-COO]⁻, tricosanoate [CH₃-(CH₂)₂₁-COO]⁻, tetracosanoate or lignocerate [CH₃-(CH₂)₂₂-COO]⁻, pentacosanoate [CH₃-(CH₂)₂₃-COO]⁻, hexacosanoate [CH₃-(CH₂)₂₄-COO]⁻, heptacosanoate acid [CH₃-(CH₂)₂₅-COO]⁻, octacosanoate [CH₃-(CH₂)₂₆-COO]⁻, nonacosanoate [CH₃-(CH₂)₂₇-COO]⁻, triacontanoate [CH₃-(CH₂)₂₈-COO]⁻, hentriacontanoate [CH₃-(CH₂)₂₉-COO]⁻, dotriacontanoate [CH₃-(CH₂)₃₀-COO]⁻, palmitoleate [CH₃-(CH₂)₅-CH=CH-(CH₂)₇-COO]⁻, oleate [CH₃(CH₂)₇CH=CH(CH₂)₇COO]⁻, linoleate [CH₃-(CH₂)₄-(CH=CHCH₂)₂-(CH₂)₆-COO]⁻, linolenate [CH₃-CH₂-(CH=CHCH₂)₃-(CH₂)₆-COO]⁻ and arachidonate [CH₃-(CH₂)₄-(CH=CHCH₂)₄-(CH₂)₂-COO]⁻,
- the anions: 7,7-dimethyloctanoate [(CH₃)₃C-(CH₂)₅-COO]⁻, 2,2-dimethyloctanoate [CH₃-(CH₂)₅-C(CH₃)₂-COO]⁻, 2,2,3,5-tetramethylhexanoate [(CH₃)₂CH-CH₂-CH(CH₃)-C(CH₃)₂-COO]⁻, 2, 5-dimethyl-2-ethylhexanoate [(CH₃)₂CH-(CH₂)₂-C(CH₃)(C₂H₅)-COO]⁻, 2,2-diethylhexanoate [CH₃-(CH₂)₃-C(C₂H₅)₂-COO]-, 2,4-dimethyl-2-isopropylpentanoate [(CH₃)₂CH-CH₂-C(CH₃) (i-propyl) -COO]⁻, and
- C₁₀ to C₂₀ and preferably C₁₀ to C₁₅ naphthenate anions.

7. Process according to any one of Claims 1, 4 and 5, **characterized in that** the carboxylate ligands are chosen from the group formed by the carboxylates of empirical formula [C₁₀H₁₉O₂]⁻ and C₁₀ to C₂₀ and preferably C₁₀ to C₁₅ naphthenates.

8. Process according to Claim 1, **characterized in that** the catalyst **(M)** is the [Mg(neodecanoate)₂] complex or the [Mg(naphthenate)₂] complex with the naphthenate anion having a C₁₀ to C₂₀ and preferably C₁₀ to C₁₅ chemical structure.

9. Process according to Claim 1, in which the organosilicon compound **A** is a polyorganosiloxane comprising:
(i) at least two siloxyl units of formula **(3)** below: 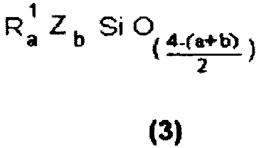 in which:
- the symbols R¹, which may be identical or different, represent C₁ to C₃₀ monovalent hydrocarbon-based radicals,
- the symbols Z, which may be identical or different, each represent a hydrolyzable and condensable group or a hydroxyl group and are preferably chosen from the group formed by groups such as: hydroxyl, alkoxy, alkoxy-alkylene-oxy, amino, amido, acylamino, aminoxy, iminoxy, ketimonoxy, acyloxy, iminoxi, ketiminoxy and enoxy,
- a is equal to 0, 1 or 2, b is equal to 1, 2 or 3, the sum a + b is equal to 1, 2 or 3, and optionally (ii) one or more siloxyl units of formula **(4)** below: 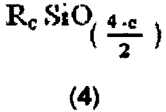
in which:
- the symbols R, which may be identical or different, represent C₁ to C₃₀ monovalent hydrocarbon-based radicals optionally substituted with one or more halogen atoms or with groups from among: amino, ether, ester, epoxy, mercapto or cyano, and
- the symbol c is equal to 0, 1, 2 or 3.

10. Process according to Claim 1, in which the crosslinking agent **B** is preferably a silicon compound in which each molecule comprises at least three hydrolyzable and condensable groups **Y** and said crosslinking agent **B** having the formula **(5)** below:
**R'₍₄₋ₐ₎SiYₐ** **(5)**
- in which:
- the symbol R' is a monovalent hydrocarbon-based radical comprising from 1 to 30 carbon atoms,
- the symbol Y is an alkoxy, alkoxy-alkylene-oxy, amino, amido, acylamino, aminoxy, iminoxy, ketiminoxy, acyloxy and enoxy group and preferably Y is an alkoxy, acyloxy, enoxy, ketiminoxy or oxime group, and
- the symbol a = 3 or 4.

11. Process according to Claim 1, **characterized in that** the crosslinkable liquid silicone composition **(X)** does not contain any catalyst having in its structure at least one tin atom.

12. Process according to Claim 1, **characterized in that**, in step b), said silicone composition **(X)** is deposited onto a flexible support **(S)** which is a textile by transfer, by dip roll or by spraying using a nozzle, a doctor blade, a rotating frame or a reverse roll.

13. Process according to Claim 1, **characterized in that** the flexible support **(S)** is a textile and preferably a lace or an elastic band.

14. Flexible support **(S)** coated on one or two faces continuously or discontinuously with a solid silicone elastomer that may be obtained via the process as defined according to any one of Claims 1 to 13.

15. Composite material comprising:
- a flexible support **(S)** which may optionally be covered on one or two faces with one or more layers of a polymer material, and
- a coat on said flexible support or on said polymer material, formed by a solid silicone elastomer obtained according to the process as defined according to any one of Claims 1 to 13.

16. Use of the liquid silicone composition **(X)** that is crosslinkable via condensation reactions as defined according to any one of Claims 1 to 11, for coating a flexible support **(S).**

17. Use of the catalyst **(M)** as defined according to Claim 1 or according to any one of Claims 4 to 8, for obtaining transparent or translucent solid silicone elastomers.

18. Liquid silicone composition **(X)** that is crosslinkable via condensation reactions, as defined according to Claim 1 or according to any one of Claims 4 to 11.

19. Solid silicone elastomer obtained by crosslinking in the presence of humidity provided by the ambient air of composition **(X)** as described according to Claim 18.

20. One-pack RTV-1 composition which is in a single airtight pack **P** and comprising composition **(X)** as defined according to Claim 1.

21. Two-pack RTV-2 composition, which is a precursor of composition **(X)** as defined according to Claim 1, which is in two distinct packs **P1** and **P2, characterized in that**:
a) pack **P1** is airtight and comprises:
- a catalytically effective amount of at least one catalyst **(M)** which is a magnesium complex comprising in its structure two identical or different carboxylate ligands, comprising from 10 to 32 carbon atoms, and
- at least one crosslinking agent **(B),** and
b) pack **P2** does not contain either said catalyst **(M)** or said crosslinking agent **(B)** and comprises:
- per 100 parts by weight of at least one organosilicon compound **(A)** comprising at least two identical or different hydrolyzable and condensable groups, or at least two silanol functions ≡SiOH, and
- from 0 to 10 parts by weight of water.
